(19) Europäisches Patentamt
European Patent Office
Office européen des brevets

(11) **EP 3 443 036 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **17718846.3**

(22) Anmeldetag: **05.04.2017**

(51) Int Cl.:
***C08L 23/22*** *(2006.01)*

(86) Internationale Anmeldenummer:
**PCT/EP2017/058095**

(87) Internationale Veröffentlichungsnummer:
**WO 2017/178298 (19.10.2017 Gazette 2017/42)**

(54) **HAFTVERMITTLUNGSZUSAMMENSETZUNG FÜR EIN KORROSIONSSCHUTZPRODUKT**

ADHESION PROMOTING COMPOSITION FOR AN ANTI-CORROSION PRODUCT

COMPOSITION D'ACCROCHAGE POUR UN PRODUIT ANTICORROSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2016 DE 102016106927**

(43) Veröffentlichungstag der Anmeldung:
**20.02.2019 Patentblatt 2019/08**

(73) Patentinhaber: **DENSO-Holding GmbH & Co.**
**51371 Leverkusen (DE)**

(72) Erfinder:
• **KAISER, Thomas, Markus**
**52459 Inden (DE)**
• **GRYSHCHUK, Oleg**
**51381 Leverkusen (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
**GB-A- 1 414 059     GB-A- 2 011 430**
**GB-A- 2 179 359     US-A- 3 470 127**
**US-A- 3 876 454     US-A1- 2010 214 376**

EP 3 443 036 B1

**Beschreibung**

Die vorliegende Erfindung betrifft eine Haftvermittlungszusammensetzung für ein Korrosionsschutzprodukt, insbesondere ein Korrosionsschutzprodukt mit einer Korrosionsschutzzusammensetzung, umfassend mindestens einen Butylkautschuk, einen Träger mit einer erfindungsgemäßen Haftvermittlungszusammensetzung als auch Verfahren und Verwendungen hierzu.

Korrosionsschutzprodukte, insbesondere bandförmige, beispielsweise für Rohranlagen wie Pipelines, aber auch technische Anlagen etc., sind aus dem Stand der Technik vielfältig bekannt. EP 0 421 607 A1 offenbart ein Bandumwicklungssystem zum Schutz von rohrförmigen Gegenständen, das eine Innenumwicklung, die die Oberfläche des zu schützenden Gegenstandes bedeckt und eine über die Innenumwicklung angeordnete Außenumwicklung umfasst. Die Innenumwicklung umfasst eine stoßfeste Schicht mit einer Klebschicht auf ihrer inneren Oberfläche und eine Schicht auf ihrer äußeren Oberfläche. Die Außenumwicklung umfasst eine Trägerschicht. Die Innenumwicklung und die Außenumwicklung weisen warmverschmelzbares Material auf, wobei das Bandumwicklungssystem auf den rohrförmigen Gegenstand so aufgebracht wird, dass bei Erwärmen und Abkühlen die Außenumwicklung mit der Innenumwicklung warmverschmelzen und dadurch eine vollständig geschlossene schützende Beschichtung gebildet wird. Als warmschmelzbares Material wird beispielsweise Ethylenvinylacetat, Ethylenmethylacrylat und Polyethylen niedriger Dichte eingesetzt. Nachteilig an dem in der EP 0 421 607 A1 offenbarten Bandumhüllungssystem ist, dass bei höheren Temperaturen sich dieses von dem umhüllten Gegenstand, z. B einer Pipeline, ablösen kann und/oder dessen mechanische Eigenschaften sich verschlechtern. Dies hängt insbesondere mit einer Depolymerisation der eingesetzten Materialien zusammen, sei es der warmschmelzbaren Materialien, sei es der Trägerschicht. Eine Verbesserung der Haftung kann zwar grundsätzlich durch Verwendung lösemittelhaltiger Primer bzw. Haftvermittler erzeugt werden, jedoch ist dies oftmals ebenfalls nicht ausreichend, vor allen Dingen haben diese auch keinerlei Einfluss auf die mechanischen Eigenschaften der Umhüllung an sich.

Es ist daher Aufgabe der vorliegenden Erfindung, eine Haftvermittlungszusammensetzung für ein Korrosionsschutzprodukt zur Verfügung zu stellen, welche die aus dem Stand der Technik bekannten Nachteile vermeidet.

Zur Lösung dieser Aufgabe wird eine Haftvermittlungszusammensetzung für ein Korrosionsschutzprodukt, bevorzugt ein bandförmiges Korrosionsschutzprodukt, umfassend mindestens einen Butylkautschuk, vorgeschlagen, wobei die Haftvermittlungszusammensetzung umfasst

- etwa 20 Gew.-% bis etwa 70 Gew.-% mindestens eines Polyolefins, ausgewählt aus einer Gruppe umfassend Polyethylene und/oder Polypropylene;
- etwa 20 Gew.-% bis etwa 65 Gew.-% mindestens eines Butylkautschuks; und
- etwa 6 Gew.-% bis etwa 35 Gew.-% mindestens eines Elastomeren, ausgewählt aus einer Gruppe umfassend Ethylen-Propylen-Kautschuk und/oder Ethylen-Propylen-Dien-Kautschuk;

wobei die Gewichtsprozentangaben (Angaben in Gewichtsprozent, abgekürzt Gewichts-% oder Gew.-%) jeweils bezogen sind auf die Gesamtmenge der Haftvermittlungszusammensetzung.

Das mindestens eine Polyolefin liegt vorzugsweise in einer Menge in einem Bereich von etwa 30 Gew.-% bis etwa 60 Gew.-%, weiter bevorzugt in einer Menge in einem Bereich von etwa 32 Gew.-% bis etwa 55 Gew.-%, jeweils bezogen auf die Gesamtmenge der Haftvermittlungszusammensetzung in selbiger vor. Soweit als Polyolefin ein Polyethylen ausgewählt ist, ist dieses bevorzugt ausgewählt aus einer Gruppe umfassend Polyethylen hoher Dichte (HDPE), Polyethylen mittlerer Dichte (MDPE), Polyethylen niedriger Dichte (LDPE), lineares Polyethylen niedriger Dichte (LLDPE), hochmolekulares Polyethylen (PE-HMW) und/oder ultrahochmolekulares Polyethylen (PE-UHMW), wobei besonders bevorzugt mindestens ein MDPE und/oder mindestens ein HDPE eingesetzt ist. Ein MDPE weist bevorzugt eine Dichte zwischen etwa 0,926 g/cm$^3$ und etwa 0,939 g/cm$^3$, ein HDPE zwischen etwa 0,94 g/cm$^3$ und 0,97 g/cm$^3$ auf, jeweils bestimmt gemäß ISO 1183 in der zum Zeitpunkt der vorliegenden Patentanmeldung gültigen Fassung.

Soweit als Polyolefin ein Polypropylen ausgewählt ist, ist dieses bevorzugt ausgewählt aus einer Gruppe umfassend isotaktisches Polypropylen (iPP), syndiotaktisches Polypropylen (sPP) und/oder ataktisches Polypropylen (aPP), wobei vorzugsweise ein isotaktisches Polypropylen ausgewählt ist. Das isotaktische Polypropylen ist bevorzugt ausgewählt aus einer Gruppe umfassend Homopolymere, Block-Copolymere und/oder Random-Copolymere. Als Copolymer wird bevorzugt Ethen eingesetzt.

Besonders bevorzugt umfasst die erfindungsgemäße Haftvermittlungszusammensetzung genau ein Polyolefin oder genau ein Polypropylen.

Bevorzugt ist das mindestens eine Polyolefin elektronenstrahlvernetzbar. Besonders bevorzugt ist dabei das Polyolefin ein elektronenstrahlvernetzbares Polyethylen mittlerer Dichte oder höherer Dichte, oder aber ein Polypropylen, bevorzugt ein isotaktisches Polypropylen, wobei bei Einsatz von Polypropylen dieses zu einer erfolgreichen Elektronenstrahlvernetzung bevorzugt als Masterbatch eingesetzt wird mit mindestens einem Vernetzungsbeschleuniger und ggf. geeigneten Copolymeren. Durch eine Elektronenstrahlvernetzung der elektronenstrahlvernetzbaren Polyolefine werden insbesondere deren Temperaturbeständigkeiten, aber auch mechanischen Festigkeiten verbessert. Soweit als mindestens ein Polyolefin ein Polyethylen eingesetzt ist, weist dieses vorteilhafterweise eine Dichte von mindestens 800 kg/m$^3$, gemessen gemäß ISO 1872-2/ ISO 1183 in der zum Zeitpunkt der Patentanmeldung gültigen Fassung auf, und liegt bevorzugt in einem Bereich von etwa 850 kg/m$^3$ bis etwa 1.000 kg/m$^3$, weiter bevorzugt in einem Bereich von etwa 900 kg/m$^3$ bis etwa 980 kg/m$^3$. Soweit als mindestens ein Polyolefin ein Polypropylen eingesetzt ist, weist dieses vorteilhafterweise eine Dichte von bevorzugt mindestens 800 kg/m$^3$, gemessen gemäß ISO 1872-2/ ISO 1183 in der zum Zeitpunkt der Patentanmeldung gültigen Fassung, auf und liegt bevorzugt in einem Bereich von etwa 850 kg/m$^3$ bis etwa 980 kg/m$^3$, weiter bevorzugt in einem Bereich von etwa 890 kg/m$^3$ bis etwa 960 kg/m$^3$.

Eine Elektronenstrahlvernetzung der erfindungsgemäßen Haftvermittlungszusammensetzung erfolgt vorteilhafterweise mit β-Strahlen, kann jedoch auch mit γ-Strahlen erfolgen. Bevorzugt wird eine Bestrahlung mit einer Dosis in einem Bereich von etwa 25 kGy bis etwa 250 kGy erfolgen.

Das mindestens eine Polyolefin, insbesondere Polyethylen oder Polypropylen, muss jedoch nicht elektronenstrahlvernetzbar sein, wenn andere, alternative Methoden der Vernetzung oder Verbindung zur Anwendung kommen, wie etwa Wärmebehandlung. Mit einer Wärmebehandlung ist es ebenfalls möglich, die erfindungsgemäße Haftvermittlungszusammensetzung zu vernetzen oder zu verbinden, beispielsweise mit einem Träger und/oder einer Korrosionsschutzzusammensetzung. Die Wärmebehandlung erfolgt bei einer Temperatur, bei der die Viskosität der Bestandteile der Haftvermittlungszusammensetzung, vor allem des mindestens einen Butylkautschuks und des mindestens einen Elastomeren, herabgesetzt ist, bevorzugt bei etwa 150°C bis etwa 200°C, weiter bevorzugt bei etwa 160°C bis etwa 180°C.

Bevorzugt ist der mindestens eine Butylkautschuk ausgewählt aus einer Gruppe umfassend zumindest teilweise vernetzte und/oder unvernetzte Butylkautschuke. Besonders bevorzugt umfasst die erfindungsgemäße Haftvermittlungszusammensetzung genau einen Butylkautschuk, bevorzugt einen zumindest teilweise vernetzten Butylkautschuk. In einer alternativen Ausführungsform umfasst die erfindungsgemäße Haftvermittlungszusammensetzung bevorzugt genau einen vernetzten Butylkautschuk und genau einen unvernetzten Butylkautschuk. Bevorzugt umfasst die erfindungsgemäße Haftvermittlungszusammensetzung mindestens einen Butylkautschuk in einer Menge von mindestens etwa 23 Gew.-% bis etwa 60 Gew.-%, weiter bevorzugt in einer Menge in einem Bereich von etwa 25 Gew.-% bis etwa 53 Gew.-%, jeweils bezogen auf die Gesamtmenge der Haftvermittlungszusammensetzung. Soweit eine Mischung eines vernetzten Butylkautschuks mit einem unvernetzten Butylkautschuk vorgesehen ist, liegt der vernetzte Butylkautschuk in einer Menge in einem Bereich von etwa 5 Gew.-% bis etwa 95 Gew.-% und der unvernetzte Butylkautschuk in einer Menge in einem Bereich von etwa 95 Gew.-% bis etwa 5 Gew.-% in einer solchen Mischung vor. Bevorzugt weist eine solche Mischung genau eines vernetzten Butylkautschuks und eines unvernetzten Butylkautschuks den vernetzten Butylkautschuk in einer Menge in einem Bereich von etwa 45 Gew.-% bis etwa 95 Gew.-% und den unvernetzten Butylkautschuk in einer Menge in einem Bereich von etwa 5 Gew.-% bis etwa 55 Gew.-% auf. Weiter bevorzugt liegt das Verhältnis des unvernetzten Butylkautschuks zu dem vernetzten Butylkautschuk in einer solchen Mischung in einem Bereich von etwa 1,1:1 bis etwa 4:1.

Soweit als mindestens ein Butylkautschuk ein zumindest teilweise vernetzter Butylkautschuk eingesetzt ist, weist dieser bevorzugt eine Mooney-Viskosität ML (1 +3) bei 127°C in einem Bereich von etwa 50 MU bis etwa 98 MU auf. Die Mooney-Viskosität wird gemäß ISO 289 in der Version 2005 oder gemäß ASTM 1604-04 bestimmt. Bevorzugt liegt die Mooney-Viskosität ML (1 + 3) bei 127°C in einem Bereich von etwa 60 MU bis etwa 90 MU, weiter bevorzugt in einem Bereich von etwa 65 MU bis etwa 93 MU, noch weiter bevorzugt in einem Bereich von etwa 78 MU bis etwa 92 MU und noch weiter bevorzugt in einem Bereich von etwa 78 MU bis etwa 90 MU. Die spezifische Dichte des zumindest teilweise vernetzten, weiter bevorzugt stark vernetzten Butylkautschuks bei einer Temperatur von 25°C gemäß ASTM D1875 in der Version von 2003 liegt in einem Bereich von etwa 0,5 bis etwa 1,1, bevorzugt in einem Bereich von etwa 0,9 bis etwa 0,98. Der mindestens eine vernetzte Butylkautschuk ist bevorzugt ausgewählt aus einer Gruppe umfassend vernetzte Butylkautschuke einschließlich Halobutylkautschuke. Soweit in Bezug auf den Butylkautschuk der Begriff "vernetzt" verwendet wird, ist dieser zu verstehen als bezogen auf das Ausgangsmaterial und nicht in Bezug auf die fertige Haftvermittlungszusammensetzung, die ja insbesondere auch einer Elektronenstrahlvernetzung unterziehbar ist. Daher kann der eingesetzte mindestens eine vernetzte Butylkautschuk auch als vorvernetzter Butylkautschuk bezeichnet werden im Sinne der vorliegenden Erfindung.

Soweit als mindestens ein Butylkautschuk ein unvernetzter Butylkautschuk eingesetzt ist, weist dieser bevorzugt ein mittleres Molekulargewicht in einem Bereich von etwa 150.000 bis etwa 2.000.000 auf. Er weist bevorzugt eine Mooney-Viskosität ML (1 + 8) bei 125°C in einem Bereich von etwa 20 MU bis etwa 65 MU auf. Bevorzugt weist der mindestens eine unvernetzte Butylkautschuk ein mittleres Molekulargewicht $M_W$ (auch mittlere Molmasse oder molekulare Masse $M_W$ genannt) in einem Bereich von etwa 300.000 bis etwa 1.800.000, weiter bevorzugt in einem Bereich von etwa 200.000 bis etwa 500.000 auf. Bevorzugt weist der mindestens eine unvernetzte Butylkautschuk eine Mooney-Viskosität ML ( 1 + 8) bei 125°C in einem Bereich von etwa 25 MU bis etwa 65 MU, bevorzugt von etwa 30 MU bis etwa 60 MU, noch weiter bevorzugt von etwa 40 MU bis etwa 59 MU, und noch weiter bevorzugt von etwa 40 MU bis etwa 55 MU, gemessen gemäß ISO 289 in der Version von 2005 oder gemäß ASTM 1604-04, auf.

Unter dem Begriff Butylkautschuk werden im Sinne der vorliegenden Erfindung insbesondere verstanden Co- oder Block-Co-Polymere von Isobutylen mit etwa 0,5 Gew.-% bis etwa 5,0 Gew.-% Isopren, bezogen auf die Gesamtmenge des Butylkautschuks. Bevorzugt werden diese hergestellt durch kationische Polymerisation. Im Sinne der vorliegenden Erfindung fallen unter den Begriff Butylkautschuk insbesondere auch halogenierte Butylkautschuke, insbesondere solche, die chloriert bzw. bromiert sind (Chlorbutylkautschuk bzw. Brombutylkautschuk). Es können auch Gemische mehrerer Butylkautschuke eingesetzt werden, d. h. mehr als mindestens ein Butylkautschuk.

Der mindestens eine Butylkautschuk der erfindungsgemäßen Haftvermittlungszusammensetzung weist Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-%, ungesättigte Bindungen, d. h. Kohlenstoff-KohlenstoffDoppelbindungen, als funktionelle Gruppen in dem mindestens einen Butylkautschuk vorliegen. Besonders bevorzugt ist der mindestens eine Butylkautschuk hergestellt durch eine Copolymerisation von Isobutylen und Isopren in Methylchlorid als Lösemittel.

Bevorzugt ist das mindestens eine Elastomer ein Ethylen-Propylen-Dien-Kautschuk, bevorzugt in einer Menge in einem Bereich von etwa 18 bis etwa 30 Gew.%, besonders bevorzugt in einem Bereich von etwa 15 bis etwa 28 Gew.-% (Gew.% jeweils bezogen auf die Gesamtmenge der Haftvermittlungszusammensetzung), dessen Dien ein 5-Ethyliden-2-Norbornen in einer Menge in einem Bereich von etwa 0,8 Gew.-% bis etwa 8 Gew.-%, bevorzugt in einer Menge in einem Bereich von etwa 1 Gew.-% bis etwa 7,5 Gew.-%, noch weiter bevorzugt in einer Menge in einem Bereich von etwa 1,4 Gew.-% bis etwa 7 Gew.-%, bezogen auf die Gesamtmenge der Monomere, die in einer Polymerisation zu dem Ethylen-Propylen-Dien-Kautschuk eingesetzt sind, ist.

Unter dem Begriff des Ethylen-Propylen-Dien-Kautschuks, welcher als mindestens ein Elastomer von der erfindungsgemäßen Haftvermittlungszusammensetzung umfasst sein kann, werden insbesondere solche Co- oder Block-Co-Polymere als auch Terpolymere verstanden, welche als funktionelle Gruppen eine Kohlenstoff-Kohlenstoff-Doppelbindung aufweisen. Auch können Mischungen verschiedener Elastomere eingesetzt werden. Besonders bevorzugt sind dabei Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen bis zu etwa 15 Gew.-%, bevorzugt in Mengen in einem Bereich von etwa 0,3 Gew.-% bis etwa 12 Gew.-%. Im Falle des Einsatzes von 5-Ethyliden-2-Norbornen werden vorzugsweise Mengen in einem Bereich von etwa 0,5 Gew.-% bis etwa 11 Gew.-% und im Falle eines Einsatzes von Dicyclopentadien Mengen in einem Bereich von etwa 1 Gew.-% bis etwa 6 Gew.-% eingesetzt. Die vorstehenden Gewichtsprozentangaben (Angaben in Gewichtsprozent, abgekürzt Gewichts-% oder Gew.-%) sind dabei bezogen auf die Gesamtmenge der Monomere, die in einer Polymerisation zu einem EPDM bzw. Ethylen-Propylen-Kautschuk eingesetzt sind.

Die erfindungsgemäße Haftvermittlungszusammensetzung kann weiterhin mindestens ein Additiv, ausgewählt aus einer Gruppe umfassend Tackifier, Antioxidantien, Katalysatoren, Co-Reagenzien und/oder Pigmente umfassen. Besonders bevorzugt hiervon sind Pigmente, insbesondere Farbpigmente. Diese können auch beispielsweise in einem Masterbatch mit dem mindestens einen Polyolefin eingesetzt werden. Wird das mindestens eine Polyolefin in Form eines Masterbatches eingesetzt, weist dieses bevorzugt mindestens 92 Gew.-%, bezogen auf die Gesamtmenge des Masterbatches, des Polyolefins auf, weiter bevorzugt mindestens 94 Gew.-% des mindestens einen Polyolefins. Ein Pigment, beispielsweise Ruß, ist bevorzugt in einer Menge in einem Bereich von etwa 0,5 Gew.-% bis etwa 8 Gew.-%, weiter bevorzugt in einer Menge von etwa 1 Gew.-% bis etwa 6 Gew.-%, von einem solchen Masterbatch des mindestens einen Polyolefins umfasst.

Als Tackifier können Kohlenwasserstoffharze eingesetzt werden, bevorzugt in einem Bereich von etwa 0,5 Gew.-% bis etwa 10 Gew.-%, weiter bevorzugt in einem Bereich von etwa 1 Gew.-% bis etwa 5 Gew.-%, jeweils bezogen auf die Gesamtmenge der erfindungsgemäßen Haftvermittlungszusammensetzung . Auch kann ggf. der erfindungsgemäßen Haftvermittlungszusammensetzung mindestens ein Oxidationsmittel zugegeben sein. Vorzugsweise erfolgt die Vorsehung einer Mischung verschiedener Oxidationsmittel. Das mindestens eine Oxidationsmittel ist in einer Menge in einem Bereich von etwa 0,1 Gew.-% bis etwa 1 Gew.-%, weiter bevorzugt in einer Menge in einem Bereich von etwa 0,2 Gew.-% bis etwa 0,5 Gew.-%, jeweils bezogen auf die Gesamtmenge der erfindungsgemäßen Haftvermittlungszusammensetzung, vorhanden. Als Katalysatoren werden bevorzugt organische Verbindungen mit Zink oder Zinn, zum Beispiel Zinkstearate oder Zinkoleate, alleine oder in Mischung, eingesetzt. Die Katalysatoren, einzeln oder in Mischung, sind vorzugsweise in einer Menge in einem Bereich von etwa 0,001 Gew.-% bis etwa 10 Gew.-%, bevorzugt in einem Bereich von etwa 0,005 Gew.-% bis etwa 4 Gew.-%, jeweils bezogen auf die Gesamtmenge der Haftvermittlungsschicht, umfasst.

Weiter bevorzugt kann die erfindungsgemäße Haftvermittlungszusammensetzung mindestens ein Co-Reagenz für das Katalysatormittel, ausgewählt aus einer Gruppe umfassend Triallylcyanurat, Triallylisocyanurat, Triallylphosphat und/oder Divinylbenzol, und besonders bevorzugt ein Triallylcyanurat und/oder ein Triallylisocyanurat umfassen. Das Co-Reagenz dient insbesondere der Verträglichmachung des eingesetzten Katalysatormittels der Zusammensetzung. Die Haftvermittlungszusammensetzung umfasst das Co-Reagenz vorteilhafterweise in einer Menge in einem Bereich von etwa 0,01 Gew.-% bis etwa 5 Gew.-%, weiter bevorzugt in einer Menge in einem Bereich von etwa 0,2 Gew.-% bis etwa 5 Gew.-%, bevorzugt bis etwa 3 Gew.-%, bezogen auf die Gesamtmenge der Haftvermittlungszusammensetzung. Besonders bevorzugt ist als Co-Reagenz eingesetzt ein solches aus einer Gruppe umfassend Triallylcyanurat, Triallylisocyanurat und/oder Triallylphosphat, besonders bevorzugt mindestens ein Triallylcyanurat, wobei die vorstehend genannten Co-Reagenzien in einer Menge in einem Bereich von etwa 0,02 Gew.-% bis etwa 2 Gew.-%, bevorzugt in einer Menge in einem Bereich von etwa 0,025 Gew.-% bis etwa 0,3 Gew.-%, jeweils bezogen auf die Gesamtmenge der Haftvermittlungszusammensetzung, in der Zusammensetzung enthalten sein können.

Besonders bevorzugte Haftvermittlungszusammensetzungen weisen jeweils genau ein Polyolefin, genau einen Butylkautschuk und genau ein Elastomer auf. Besonders bevorzugt ist dabei als genau ein Polyolefin ein Polyethylen oder ein Polypropylen, bevorzugt jeweils ein elektronenstrahlvernetzbares, eingesetzt. Als genau ein Butylkautschuk kann bevorzugt ein vernetzter, der auch als vorvernetzter angesprochen werden kann, Butylkautschuk eingesetzt. Als genau ein Elastomer wird vorteilhafterweise ein Ethylen-Propylen-Dien-Kautschuk, ganz besonders bevorzugt ein solcher mit 5-Ethyliden-2-Norbornen als Dien eingesetzt. Eine besonders bevorzugte erfindungsgemäße Haftvermittlungszusammensetzung umfasst etwa 22 Gew.-% bis etwa 55 Gew.-% eines vernetzten Butylkautschuks, etwa 28 Gew.-% bis etwa 53 Gew.-% mindestens eines elektronenstrahlvernetzbaren Polyethylens oder Polypropylens und etwa 12 Gew.-% bis etwa 30 Gew.-% eines Ethylen-Propylen-Dien-Kautschuks mit 5-Ethyliden-2-Norbornen als Dien in einer Menge von etwa 1,5 Gew.-% bis etwa 5 Gew.-%, bezogen auf die Monomeren, die in einer Polymerisation zu dem Ethylen-Propylen-Dien-Kautschuk eingesetzt sind. Die vorstehend genannten Gewichtsprozentangaben mit Ausnahme des Diens beziehen sich auf die Gesamtmenge der erfindungsgemäßen Haftvermittlungszusammensetzung.

Der Vorteil der erfindungsgemäßen Haftvermittlungszusammensetzung ist, dass diese bei höheren Temperaturen als solche wirken kann und zudem auch eine ausreichende mechanische Belastbarkeit vermittelt. Sie dient insbesondere dem Einsatz in Korrosionsschutzbändern und dabei insbesondere in solchen, welche zumindest einen Träger, insbesondere in Form einer Trägerfolie, und mindestens eine Lage einer Korrosionsschutzzusammensetzung aufweisen, wobei letztere bevorzugt mindestens einen Butylkautschuk aufweist. Die erfindungsgemäße Haftvermittlungszusammensetzung eignet sich vor allem als haftvermittelnde Schicht zwischen einer Trägerfolie und einer Korrosionsschutzzusammensetzung. Die erfindungsgemäße Haftvermittlungszusammensetzung weist gute Schälwiderstände auf, die gemäß DIN EN 12068 in der Version 1999-03 bestimmbar sind und zwar nicht nur bei erhöhten Temperaturen von 80°C oder größer, sondern auch bei Raumtemperatur, d. h. 20°C oder 23°C. Der Schälwiderstand eines Korrosionsschutzbandes mit einer erfindungsgemäßen Haftvermittlungsschicht bei gleichem Träger in Form einer Trägerfolie und identischer Korrosionsschutzzusammensetzung ist etwa drei bis etwa fünf mal höher als ein Schälwiderstand einer Haftvermittlungszusammensetzung, welche beispielsweise nur aus mindestens einem Polyolefin und mindestens einem Butylkautschuk aufgebaut ist, wobei das Polyolefin und der Butylkautschuk identisch gewählt sind wie in dem Korrosionsschutzband mit der erfindungsgemäßen Haftvermittlungszusammensetzung. Der vorgenannte Schälwiderstand bezieht sich auf die mechanische Schälprüfung gemäß DIN EN 12068 in der Version 1999-03 und zwar bezogen auf sowohl eine Aufbringung eines Korrosionsschutzbandes mit einer erfindungsgemäßen Haftvermittlungsschicht auf eine Werksumhüllung eines beispielsweise Rohres wie einer Gasleitung oder Pipeline, als auch bezogen auf eine Aufbringung auf eine nicht umhüllte Rohraußenfläche, beispielsweise eines Stahlrohres.

Die stark verbesserten Schälwiderstände zeigen die sehr gute mechanische Belastbarkeit, die mit der erfindungsgemäßen Haftvermittlungszusammensetzung erzielt werden kann. Diese gilt auch bei höheren Temperaturen, insbesondere bei Temperaturen von 80°C und mehr.

Zudem vermittelt die erfindungsgemäße Haftvermittlungszusammensetzung eine hervorragende Haftung zu einem Träger, insbesondere in Form einer Trägerfolie, aber auch in Form einer Streckbremse, und zu einer Korrosionsschutzzusammensetzung, insbesondere einer solchen, die mindestens einen Butylkautschuk umfasst. Weiterhin ist vorteilhaft, dass aufgrund der spezifischen Zusammensetzung der erfindungsgemäßen Haftvermittlungszusammensetzung insbesondere bei Anordnung auf einem Träger diese mitsamt dem Träger hergestellt werden kann durch ein Laminierverfahren oder ein Coextrusionsverfahren, bevorzugt ein Coextrusionsverfahren und anschließend gemeinsam mit dem Träger einer Elektronenstrahlvernetzung unterzogen werden kann. Eine durch eine Elektronenstrahlvernetzung nachteilige Depolymerisation des Butylkautschuks wird durch den Einsatz der spezifischen Gewichtsanteile und des Zusatzes des mindestens einen Elastomers kompensiert. Hierdurch können letztendlich Träger mit einer erfindungsgemäßen Haftvermittlungsschicht erhalten werden, die eine verbesserte thermische und mechanische Belastbarkeit aufweisen.

Aufgrund dieser verbesserten Eigenschaften können mit der erfindungsgemäßen Haftvermittlungsschicht versehene Korrosionsschutzbänder je nach Ausgestaltung, insbesondere in Hinblick auf die Stärke des eingesetzten Trägers und/oder der eingesetzten mindestens einen Korrosionsschutzzusammensetzung, an z. B. Gasleitungen oder Pipelines verlegt werden, ohne dass diese nach Versehung mit einem Korrosionsschutz durch das Korrosionsschutzband in Sand gebettet werden müssen, wobei der Sand zusätzlich von außerhalb der betreffenden Baustelle herangeschafft werden muss. Stattdessen kann beispielsweise der Aushub an der Baustelle verwendet werden, ggf. nach Zerkleinerung durch geeignete Brecher zur Herstellung bestimmter Bodengüten, zur Bettung der beispielsweise Gasleitung oder Pipeline. Hierdurch können erhebliche Kosten eingespart werden, sei es in Hinblick auf den Transport und die Lagerung des Sandes, sei es in Hinblick auf verringerte Umweltschäden durch verminderte Bewegungen schweren Gerätes. Letztendlich lässt sich mit der erfindungsgemäßen Haftvermittlungszusammensetzung ein widerstandsfähiges Korrosionsschutzsystem in Form insbesondere eines bandförmigen Korrosionsschutzproduktes erhalten. Mit der erfindungsgemäßen Haftvermittlungszusammensetzung lässt sich ein widerstandsfähiges Korrosionsschutzsystem auch in Gestalt eines mattenförmigen Korrosionsschutzproduktes erhalten. Das erfindungsgemäße widerstandsfähige Korrosionsschutzsystem hat bevorzugt die Form eines Korrosionsschutzbandes oder einer Korrosionsschutzmatte, besonders bevorzugt eines Korrosionsschutzbandes.

Die vorliegende Erfindung betrifft weiterhin einen Träger mit mindestens einer, auf einer Seite desselben aufgebrachten erfindungsgemäßen Haftvermittlungszusammensetzung wie vorstehend beschrieben. Besonders bevorzugt ist der Träger bandförmig ausgebildet, kann aber auch mattenförmig oder sonst wie flächig ausgestaltet sein. Weiter bevorzugt weist der Träger auf beiden Seiten desselben eine erfindungsgemäße Haftvermittlungszusammensetzung auf. Bei einer Aufbringung auf beiden Seiten des Trägers kann die dort aufgebrachte Haftvermittlungszusammensetzung identisch sein, jedoch auch verschieden. Bevorzugt ist die Haftvermittlungszusammensetzung vollflächig auf mindestens einer Seite des Trägers aufgebracht. Der Träger kann insbesondere in Form einer Trägerfolie, eines Schrumpfbandes oder -schlauches oder einer Streckbremse ausgestaltet sein. Die Ausgestaltung als Trägerfolie oder als Streckbremse, die ebenfalls folien- und bevorzugt bandartig ausgebildet ist, unterscheidet sich insbesondere in ihrer Stärke. Soweit der Träger als Trägerfolie ausgestaltet ist, weist dieser vorteilhafterweise eine Stärke in einem Bereich von etwa 0,2 mm bis etwa 1,2 mm, weiter bevorzugt eine Stärke in einem Bereich von etwa 0,3 mm bis etwa 1,0 mm auf. Soweit der Träger als Streckbremse ausgestaltet ist, weist diese bevorzugt eine Stärke in einem Bereich von etwa 15 µm bis etwa 100 µm, weiter bevorzugt in einem Bereich von etwa 20 µm bis etwa 75 µm auf. Die Funktion einer Streckbremse ist es, eine Überdehnung z. B. eines bandförmigen Korrosionsproduktes zu verhindern, insbesondere bei einer spiralförmigen Wicklung desselben um ein zu umhüllendes Rohr, beispielsweise eine Pipeline.

Bevorzugt umfasst der Träger ein Trägermaterial ausgewählt aus einer Gruppe umfassend Polyethylen und/oder Polypropylen. Bevorzugt ist das Trägermaterial entweder ein Polyethylen oder ein Polypropylen. Das mindestens eine Polyethylen und/oder Polypropylen kann dabei in Form eines Masterbatches eingesetzt sein und insbesondere einen Pigmentzusatz aufweisen. Als Pigmente können beispielweise Ruß oder Farbpigmente zugesetzt sein in einer Menge von etwa 0,5 Gew.-% bis etwa 6 Gew.-%, weiter bevorzugt in einer Menge in einem Bereich von etwa 1 Gew.-% bis etwa 4 Gew.-%, bezogen auf die Gesamtmenge des Trägermaterials. Soweit der Träger als Streckbremse ausgebildet ist, ist diese bevorzugt gebildet aus einem Polyethylen geringer oder sehr geringer Dichte, mithin aus einem LDPE oder LLDPE. In einem bandförmigen Korrosionsschutzprodukt ist vorzugsweise eine Streckbremse mit mindestens auf einer, bevorzugt auf beiden Seiten derselben angeordneten erfindungsgemäßen Haftvermittlungszusammensetzung in Form einer Haftvermittlungsschicht symmetrisch etwa in der Mitte in einem, insbesondere bandförmigen, Korrosionsschutzprodukt angeordnet, kann jedoch auch asymmetrisch verschoben zu der Oberseite oder Unterseite des Produktes in diesem angeordnet sein. Besonders bevorzugt ist eine symmetrische Anordnung etwa in der Mitte, d. h. bei halber Stärke eines bandförmigen Korrosionsschutzproduktes. Soweit der Träger als Streckbremse ausgestaltet ist und als Material für den Träger ein LDPE oder LLDPE eingesetzt ist, ist von der erfindungsgemäßen Haftvermittlungszusammensetzung ein entsprechendes Polyethylen umfasst, d. h. ein LDPE oder LLDPE, wobei die Polyethylene im Trägermaterial bzw. in der Haftvermittlungszusammensetzung nicht identisch sein müssen, es jedoch bevorzugt sind. Das als Trägermaterial bei Ausgestaltung des Trägers als Streckbremse eingesetzte Polyethylen und/oder Polypropylen ist bevorzugt elektronenstrahlvernetzbar.

Soweit der Träger als Trägerfolie ausgebildet ist, ist dieser vorteilhafterweise aus genau einem Polyethylen oder genau einem Polypropylen gebildet, wobei das Polyethylen bzw. Polypropylen bevorzugt elektronenstrahlvernetzbar ist. Auch bei Einsatz als Trägerfolie kann das Polyethylen bzw. Polypropylen als Masterbatch eingesetzt werden, wobei weitere Additive und insbesondere auch Pigmente, wie beispielsweise Ruß oder Farbpigmente, zugegen sein können, und zwar bevorzugt in einer Menge in einem Bereich von etwa 0,5 Gew.-% bis etwa 6 Gew.-%, weiter bevorzugt in einer Menge in einem Bereich von etwa 1 Gew.-% bis etwa 5 Gew.-%, jeweils bezogen auf die Gesamtmenge des eingesetzten Trägermaterials. Bevorzugt wird als Polyethylen bei einer Ausgestaltung des Trägers als Trägerfolie ein Polyethylen mittlerer Dichte (MDPE) oder ein Polyethylen höherer Dichte (HDPE) eingesetzt, bevorzugt ein solches, welches elektronenstrahlvernetzbar ist. Die entsprechende Haftvermittlungsschicht, die auf einer oder beiden Seiten der Trägerfolie angeordnet sein kann, ist vorzugweise aus einer erfindungsgemäßen Haftvermittlungszusammensetzung mit mindestens einem MDPE und/oder mindestens einem HDPE, bevorzugt elektronenstrahlvernetzbar, erzeugt. Soweit ein Polypropylen als Trägermaterial in einem Träger, ausgebildet als Trägerfolie, vorgesehen ist, ist bevorzugt ein isotaktisches Polypropylen eingesetzt, welches zum Zweck der Elektronenstrahlvernetzbarkeit noch Copolymere und/oder Vernetzungsbeschleuniger aufweisen kann. Ist der Träger als Trägerfolie aus einem Polypropylen ausgebildet, kann die Haftvermittlungsschicht aus einer erfindungsgemäßen Haftvermittlungszusammensetzung bestehen, die als mindestens ein Polyolefin ein Polyethylen oder ein Polypropylen aufweist. Damit können in dem Träger und der Haftvermittlungsschicht unterschiedliche Polyolefine vorliegen. In Hinblick auf die in der Haftvermittlungsschicht einsetzbaren Polyethylene und Polypropylene sei auf die Eigenschaften derselben, wie oben im Zusammenhang mit der Haftvermittlungszusammensetzung geschildert, verwiesen.

Bevorzugt wird bei Ausgestaltung des Trägers, sei es als Streckbremse oder Trägerfolie, diese einer leichten Reckung unterzogen, so dass vorteilhafterweise eine Schrumpfneigung bei Erwärmung derselben entsteht und eine mögliche Längenausdehnung bei Erwärmung überkompensiert werden kann. Besonders bevorzugt wird die Trägerfolie zusammen mit der auf einer oder beiden Seiten derselben angeordneten Haftvermittlungsschicht aus der erfindungsgemäßen Haftvermittlungszusammensetzung einer leichten Reckung unterzogen. Bei einer Anwendung in Form einer Umwicklung rohrförmiger Gegenstände wie beispielsweise Pipelines kann aufgrund der Reckung die Anpresskraft in Richtung auf den rohrförmigen Gegenstand verstärkt sein.

Soweit der Träger, sei es in Ausbildung als Trägerfolie, sei es in Ausbildung als Streckbremse, auf einer oder beiden Seiten eine Haftvermittlungsschicht aus der erfindungsgemäßen Haftvermittlungszusammensetzung aufweist, so weist die Haftvermittlungsschicht eine Stärke in einem Bereich von etwa 10 μm bis etwa150 μm, weiter bevorzugt eine Stärke in einem Bereich von etwa 20 μm bis etwa 100 μm, noch weiter bevorzugt eine Stärke in einem Bereich von etwa 25 μm bis etwa 80 μm auf. Soweit der Träger als Streckbremse ausgebildet ist, ist eine auf einer oder beiden Seiten derselben angeordnete Haftvermittlungsschicht in einer Stärke vorgesehen, die in etwa der Stärke der Streckbremse entspricht, oder aber in einer geringeren Stärke.

Der Träger mit mindestens auf einer Seite desselben aufgebrachten Haftvermittlungszusammensetzung ist vorteilhafterweise mit der Haftvermittlungszusammensetzung in Coextrusion hergestellt. Dabei kann bei Durchführung des Coextrusionsverfahrens auf einer oder aber auf beiden Seiten des Trägers eine Haftvermittlungsschicht aus der erfindungsgemäßen Haftvermittlungszusammensetzung aufgebracht sein. Eine Alternative zur Coextrusion wäre ein Laminierverfahren, jedoch ist ein Coextrusionsverfahren bevorzugt, da hierbei keine Delaminierungseffekte insbesondere bei niedrigen Temperaturen zwischen dem Trägermaterial des Trägers und dem Material der Haftvermittlungsschicht auftreten.

Wie bereits vorstehend erwähnt, ist das Trägermaterial, aber auch das von der Haftvermittlungsschicht erfasste mindestens eine Polyolefin bevorzugt elektronenstrahlvernetzbar. Eine Elektronenstrahlvernetzung wird bevorzugt nachfolgend oder während bzw. unmittelbar anschließend der Coextrusion oder Laminierung vorgenommen. Weist die Haftvermittlungszusammensetzung, welche die Haftvermittlungsschichten bildet, ebenfalls ein elektronenstrahlvernetzbares Polyolefin auf, so wird dieses zusammen mit dem Trägermaterial elektronenstrahlvernetzt. Hierdurch werden temperaturbeständige und mechanisch stabile coextrudierte oder laminierte Trägergebilde mit auf einer oder zwei Seiten desselben angeordneten Haftvermittlungsschichten aus den erfindungsgemäßen Haftvermittlungszusammensetzungen erhalten. Auch wenn eigentlich nachteilig an einer Elektronenstrahlvernetzung die Vorsehung von Butylkautschuk ist, wird in der erfindungsgemäßen Haftvermittlungszusammensetzung durch die gewählten Gewichtsprozentbereiche und die gewählten Inhaltsstoffe, insbesondere das mindestens eine Elastomer, gleichwohl ein mechanisch hinreichend festes, bevorzugt coextrudiertes oder laminiertes Produkt in Form eines Trägers mit einer auf einer oder beiden Seiten desselben angeordneten Haftvermittlungsschicht erhalten, wobei eine Depolymerisierung des Butylkautschuks im Rahmen der Elektronenstrahlvernetzung keine nachteiligen Folgen zeitigt.

Bevorzugt ist der Träger als Trägerfolie ausgebildet, wobei als Trägermaterial ein Polyethylen mittlerer Dichte (MDPE), bevorzugt ein elektronenstrahlvernetzbares, vorgesehen ist. Ist für die Trägerfolie als Trägermaterial ein MDPE verwendet, weist bevorzugt die Haftvermittlungsschicht ein Polyethylen mittlerer Dichte oder aber ein Polyethylen höherer Dichte (HDPE), weiter bevorzugt mindestens ein HDPE, noch weiter bevorzugt genau ein HDPE, auf. Das mindestens eine Polyethylen in der Haftvermittlungsschicht ist in diesen Fällen in einer Menge in einem Bereich von etwa 25 Gew.-% bis etwa 40 Gew.-%, bezogen auf die Gesamtmenge der Haftvermittlungsschicht, in dieser vorhanden.

Soweit der Träger als Trägerfolie ausgebildet ist und als Trägermaterial mindestens ein Polypropylen, bevorzugt ein isotaktisches Polypropylen eingesetzt ist, ist das mindestens eine Polypropylen in der Haftvermittlungsschicht in einer Menge in einem Bereich von etwa 20 Gew.-% bis etwa 55 Gew.-%, weiter bevorzugt in einer Menge in einem Bereich von etwa 25 Gew.-% bis etwa 40 Gew.-%, von der erfindungsgemäßen Haftvermittlungszusammensetzung umfasst, wobei die Gewichtsprozentangaben bezogen sind auf die Gesamtmenge der Haftvermittlungszusammensetzung.

Ein Träger, sei er ausgebildet als Streckbremse oder aber als Trägerfolie, mit auf mindestens einer Seite desselben oder auf beiden Seiten angeordneten Haftvermittlungsschicht aus einer erfindungsgemäßen Haftvermittlungszusammensetzung ist ein Zwischenprodukt, welches im Weiteren zu einem z. B. bandförmigen Korrosionsschutzprodukt verarbeitet werden kann. Die Haftvermittlungsschicht weist die erfindungsgemäße Haftvermittlungszusammensetzung auf, ggf. in elektronenstrahlvernetzter Form. Das Zwischenprodukt kann damit als zwei- oder dreilagig angesprochen werden.

Die vorliegende Erfindung betrifft weiterhin ein Korrosionsschutzprodukt, insbesondere in Bandform oder in Mattenform oder einer sonstigen flächigen Form, umfassend einen Träger mit mindestens einer Haftvermittlungszusammensetzung in Form einer Haftvermittlungsschicht wie vorstehend beschrieben und mindestens einer auf der aus der Haftvermittlungszusammensetzung gebildeten Haftvermittlungsschicht aufgebrachten Korrosionsschutzschicht aus einer Korrosionsschutzzusammensetzung. Die Korrosionsschutzzusammensetzung umfasst mindestens einen Butylkautschuk und/oder mindestens ein Polyisobutylen. Der mindestens eine Butylkautschuk der Korrosionsschutzzusammensetzung kann dabei dem unvernetzten bzw. dem zumindest teilweise vorvernetzten Butylkautschuk entsprechen, der vorstehend im Zusammenhang mit der erfindungsgemäßen Haftvermittlungsschicht offenbart ist. In soweit sei auf die dort angegebenen Eigenschaften und physikalischchemischen Parameter des Butylkautschuks verwiesen. Bevorzugt ist der mindestens eine Butylkautschuk der Korrosionsschutzzusammensetzung ein unvernetzter Butylkautschuk, wie weiter vorstehend beschrieben. Dieser kann in Teilen ersetzt sein durch einen bevorzugt depolymerisierten weiteren Butylkautschuk, insbesondere einen solchen mit einer scheinbaren Viskosität nach Brookfield gemäß DIN EN ISO 2555 in der Version 2000-01 bei 66 °C in einem Bereich von etwa 400.000 mPa · s bis etwa 2.000.000 mPa · s, bevorzugt von etwa 600.000 mPa · s bis etwa 1.600.000 mPa · s. Der depolymerisierte weitere Butylkautschuk weist bevorzugt ein mittleres Molekulargewicht $M_W$ (auch mittlere Molmasse oder molekulare Masse $M_W$ genannt) in einem Bereich von etwa 20.000 bis etwa 60.000, bevorzugt von etwa 32.000 bis etwa 48.000 auf. Der Butylkautschuk, insbesondere soweit es sich um einen unvernetzten Butylkautschuk handelt, liegt vorzugsweise bei 23°C in fester Form vor. Die DIN EN ISO 2555: 2000-01 "Kunststoff-Harze im flüssigen Zustand, als Emulsionen oder Dispersionen" wurde zur Bestimmung der scheinbaren Viskosität nach dem Brookfield-Verfahren herangezogen zur Bestimmung der Viskosität des mindestens einen depolymerisierten Butylkautschuks wie vorstehend beschrieben. Das Verhältnis des mindestens einen unvernetzten Butylkautschuks, auch wenn dieser eine Mischung darstellt, zu dem mindestens einen depolymerisierten Butylkautschuk, auch wenn dieser eine Mischung darstellt, liegt vorteilhafterweise in einem Bereich von etwa 2,5 : 1 bis etwa 1 : 2,5, weiter bevorzugt in einem Bereich von etwa 2 : 1 bis etwa 1 : 2, und noch weiter bevorzugt in einem Bereich von etwa 2,5 : 1 bis etwa 1,3 : 1. In diesen Bereichen werden im Hinblick auf eine solche Korrosionsschutzzusammensetzung hinreichend gute Werte für den Schälwiderstand und damit eine gute Haftung eines Korrosionsschutzproduktes gemäß der vorliegenden Erfindung erhalten.

Soweit in dieser Korrosionsschutzzusammensetzung ein zumindest teilweise vorvernetzter Butylkautschuk eingesetzt ist, ist dieser in der Korrosionsschutzzusammensetzung bevorzugt in einer Menge in einem Bereich von etwa 1 Gew.-% bis etwa 35 Gew.-%, weiter bevorzugt in einer Menge in einem Bereich von etwa 2 Gew.-% bis etwa 25 Gew.-%, noch weiter bevorzugt in einer Menge in einem Bereich von etwa 2,5 Gew.-% bis etwa 15 Gew.-%, jeweils bezogen auf die Gesamtmenge der Korrosionsschutzzusammensetzung, in dieser vorhanden. Bevorzugt ist der vernetzte (vorvernetzte) Butylkautschuk dabei in einer Mischung mit einem unvernetzten Butylkautschuk vorhanden, wobei das Verhältnis der Menge des mindestens einen unvernetzten Butylkautschuks, auch von Mischungen unvernetzter Butylkautschuke, zu dem zumindest teilweise vorvernetzten Butylkautschuk, auch von Mischungen desselben, in einem Bereich von etwa 80 : 1 bis etwa 1,5 : 1, bevorzugt in einem Bereich von etwa 60 : 1 bis etwa 3 : 1, liegt.

Von der Korrosionsschutzzusammensetzung kann alternativ zu mindestens einem Butylkautschuk oder in Mischung mit zumindest einem Butylkautschuk mindestens ein Polyisobutylen mit einem Staudinger Index $J_o$ in einem Bereich von etwa 230 $cm^3$/g bis etwa 900 $cm^3$/g, bevorzugt in einem Bereich von etwa 400 $cm^3$/g bis etwa 800 $cm^3$/g, und einer mittleren relativen Molmasse $\overline{M}_v$ (Viskositätsmittel) in einem Bereich von etwa 950 000 g/mol bis etwa 5.500.000 g/mol, bevorzugt mit einer mittleren relativen Molmasse $\overline{M}_v$ in einem Bereich von etwa 1.500.000 g/mol bis etwa 5.000.000 g/mol, noch weiter bevorzugt mit einer mittleren relativen Molmasse $\overline{M}_v$ in einem Bereich von etwa 3.000.000 g/mol bis etwa 4.500.000 g/mol umfasst sein. Hierbei kann das mindestens eine Polyisobutylen auch einen Staudinger Index $J_o$ in einem Bereich von etwa 230 $cm^3$/g bis etwa 900 $cm^3$/g, bevorzugt in einem Bereich von etwa 400 $cm^3$/g bis etwa 800 $cm^3$/g, und eine mittlere relative Molmasse $\overline{M}_v$ (Viskositätsmittel) in einem Bereich von etwa 919.000 g/mol bis etwa 7.493.000 g/mol, bevorzugt in einem Bereich von etwa 2.152.000 g/mol bis etwa 6.251.000 g/mol aufweisen. Weiterhin kann hierbei das mindestens eine Polyisobutylen auch einen Staudinger Index $J_o$ in einem Bereich von etwa 235 $cm^3$/g bis etwa 736 $cm^3$/g, bevorzugt in einem Bereich von etwa 316 $cm^3$/g bis etwa 692 $cm^3$/g, weiter bevorzugt in einem Be-

reich von etwa 496 cm$^3$/g bis etwa 646 cm$^3$/g und eine mittlere relative Molmasse $\overline{M}_V$ (Viskositätsmittel) in einem Bereich von etwa 950.000 g/mol bis etwa 5.500.000 g/mol, bevorzugt in einem Bereich von etwa 1.500.000 g/mol bis etwa 5.000.000 g/mol, weiter bevorzugt in einem Bereich von etwa 3.000.000 g/mol bis etwa 4.500.000 g/mol aufweisen.

Der Staudinger Index $J_O$ wurde früher auch als intrinsische Viskosität bezeichnet. Er wird berechnet aus der Flusszeit bei 20 °C durch eine Kapillare eines Ubbelohde-Viskosimeters nach der folgenden Formel (Schulz-Blaschke-Gleichung):

$$J_O = \eta_{sp}/c \, (1+0,31^x\eta_{sp}) \, cm^3/g$$

wobei

$$\eta_{sp} = \frac{t}{t_o} - 1$$

wobei t die Fließzeit der Lösung mit einer Hagenbach-Couette Korrektur, $t_0$ die Fließzeit des Lösemittels mit Hagenbach-Couette Korrektur und c die Konzentration der Lösung in g/cm$^3$ angibt. Die mittlere relative Molmasse $\overline{M}_V$ berechnet sich aus der folgenden Formel:

$$\sqrt[0.65]{\frac{J_o \times 10^2}{3.06}}$$

Derartige Polyisobutylene können zusammen mit dem mindestens einen, insbesondere zumindest teilweise vorvernetzten, Butylkautschuk eingesetzt werden, insbesondere diesen teilweise ersetzen. Es kann aber auch vorgesehen sein, dass anstatt mindestens einem, insbesondere zumindest teilweise vorvernetzten, Butylkautschuk, in der erfindungsgemäßen Korrosionsschutzzusammensetzung mindestens ein Polyisobutylen wie vorsteht definiert und in den Mengen entsprechend denjenigen des mindestens einen Butylkautschuks eingesetzt ist. Das mindestens eine Polyisobutylen liegt vorteilhafterweise in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, jeweils bezogen auf die Gesamtmenge der Korrosionsschutzzusammensetzung, in der Zusammensetzung vor, wenn es in Mischung mit mindestens einem Butylkautschuk eingesetzt ist. Es kann auch vorgesehen sein, Mischungen verschiedener Polyisobutylene mit den vorstehend angegebenen Eigenschaften einzusetzen.

Von der Korrosionsschutzzusammensetzung können alternativ zu dem mindestens einen Butylkautschuk oder in Mischung mit diesem auch mindestens ein erstes Polyisobutylen mit einem Staudinger-Index $J_0$ in einem Bereich von etwa 15 cm$^3$/g bis etwa 98 cm$^3$/g und einer mittleren relativen Molmasse $\overline{M}_V$ in einem Bereich von etwa 32.000 g/mol bis etwa 280.000 g/mol und/oder mindestens ein zweites Polyisobutylen mit einem Staudinger-Index $J_0$ in einem Bereich von etwa 105 cm$^3$/g bis etwa 238 cm$^3$/g und einer mittleren relativen Molmasse $\overline{M}_V$ in einem Bereich von etwa 350.000 g/mol bis etwa 900.000 g/mol umfasst sein. Hierbei kann das mindestens eine erste Polyisobutylen auch einen Staudinger-Index $J_0$ in einem Bereich von etwa 15 cm$^3$/g bis etwa 98 cm$^3$/g und eine mittlere relative Molmasse $\overline{M}_V$ in einem Bereich von etwa 14.000 g/mol bis etwa 247.000 g/mol und/oder das mindestens eine zweite Polyisobutylen auch einen Staudinger-Index $J_0$ in einem Bereich von etwa 105 cm$^3$/g bis etwa 238 cm$^3$/g und eine mittlere relative Molmasse $\overline{M}_V$ in einem Bereich von etwa 275.000 g/mol bis etwa 968.000 g/mol aufweisen. Des weiteren kann hierbei das mindestens eine erste Polyisobutylen einen Staudinger-Index $J_0$ in einem Bereich von etwa 26 cm$^3$/g bis etwa 106 cm$^3$/g und eine mittlere relative Molmasse $\overline{M}_V$ in einem Bereich von etwa 32.000 g/mol bis etwa 280.000 g/mol und/oder das mindestens eine zweite Polyisobutylen einen Staudinger-Index $J_0$ in einem Bereich von etwa 123 cm$^3$/g bis etwa 227 cm$^3$/g und eine mittlere relative Molmasse $\overline{M}_V$ in einem Bereich von etwa 350.000 g/mol bis etwa 900.000 g/mol aufweisen.

Polyisobutylene im Sinne der vorliegenden Erfindung werden bevorzugt über eine kationische Polymerisation von Isobuten (2-Methylpropen) synthetisiert in einem Temperaturbereich zwischen etwa -100°C und etwa 0°C. Die Temperatur beeinflusst dabei die Molmasse des solchermaßen erzeugten Polyisobutens, je niedriger die Temperatur ist, desto höher ist die Molmasse desselben. Üblicherweise werden Bortrifluorid oder Aluminiumtrichlorid in wässriger oder alkoholischer Lösung als Initiatoren eingesetzt.

Das mindestens eine erste Polyisobutylen weist vorteilhafterweise einen Staudinger-Index $J_0$ in einem Bereich von etwa 22 cm$^3$/g bis etwa 65 cm$^3$/g auf, und noch weiter bevorzugt einen Staudinger-Index $J_0$ in einem Bereich von etwa 25 cm$^3$/g bis etwa 45 cm$^3$/g. Bevorzugt weist das mindestens eine erste Polyisobutylen eine mittlere relative Molmasse $\overline{M}_V$ (Viskositätsmittel) in einem Bereich von etwa 35.000 g/mol bis etwa 95.000 g/mol und weiter bevorzugt eine mittlere relative Molmasse $\overline{M}_V$ in einem Bereich von etwa 37.000 g/mol bis etwa 70.000 g/mol auf. Das mindestens eine erste Polyisobutylen kann vorteilhafterweise auch einen Staudinger-Index $J_0$ in einem Bereich von etwa 22 cm$^3$/g bis etwa 65 cm³/g und eine mittlere relative Molmasse $\overline{M}_V$ (Viskositätsmittel) in einem Bereich von etwa 25.000 g/mol bis etwa 131.000 g/mol aufweisen, weiter bevorzugt einen Staudinger-Index $J_0$ in einem Bereich von etwa 25 cm³/g bis etwa 45 cm³/g und eine mittlere relative Molmasse $\overline{M}_V$ in einem Bereich von etwa 30.000 g/mol bis etwa 75.000 g/mol. Das mindestens eine erste Polyisobutylen kann des weiteren vorteilhafterweise einen Staudinger-Index $J_0$ in einem Bereich von etwa 28 cm³/g bis etwa 53 cm³/g und eine mittlere relative Molmasse $\overline{M}_V$ (Viskositätsmittel) in einem Bereich von etwa 35.000 g/mol bis etwa 95.000 g/mol aufweisen, weiter bevorzugt einen Staudinger-Index $J_0$ in einem Bereich von etwa 29 cm³/g bis etwa 43 cm³/g und eine mittlere relative Molmasse $\overline{M}_V$ in einem Bereich von etwa 37.000 g/mol bis etwa 70.000 g/mol.

Das mindestens eine erste Polyisobutylen ist vorteilhafterweise in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der Korrosionsschutzzusammensetzung, von dieser umfasst.

Das mindestens eine zweite Polyisobutylen weist bevorzugt einen Staudinger-Index $J_0$ in einem Bereich von etwa 106 cm³/g bis etwa 160 cm³/g auf. Bevorzugt weist das mindestens eine zweite Polyisobutylen eine mittlere relative Molmasse $\overline{M}_V$ in einem Bereich von etwa 300.000 g/mol bis etwa 600.000 g/mol auf. Bevorzugt weist das mindestens eine zweite Polyisobutylen einen Staudinger-Index $J_0$ in einem Bereich von etwa 106 cm³/g bis etwa 160 cm³/g und eine mittlere relative Molmasse $\overline{M}_V$ in einem Bereich von etwa 279.000 g/mol bis etwa 526.000 g/mol auf. Des weiteren weist das mindestens eine zweite Polyisobutylen bevorzugt auch einen Staudinger-Index $J_0$ in einem Bereich von etwa 111 cm³/g bis etwa 174 cm³/g und eine mittlere relative Molmasse $\overline{M}_V$ in einem Bereich von etwa 300.000 g/mol bis etwa 600.000 g/mol auf.

Bevorzugt ist das mindestens eine zweite Polyisobutylen in einer Menge in einem Bereich von etwa 10 Gew.-% bis etwa 35 Gew.-%, weiter bevorzugt in einer Menge in einem Bereich von etwa 13 Gew.-% bis etwa 28 Gew.-%, jeweils bezogen auf die Gesamtmenge der Korrosionsschutzzusammensetzung, von dieser umfasst.

Das Verhältnis des mindestens einen ersten Polyisobutylens, also der Gesamtmenge des eingesetzten ersten Polyisobutylens, auch wenn eine Mischung vorliegt, zu dem mindestens einen zweiten Polyisobutylen, das heißt der Gesamtmenge des zweiten Polyisobutylens, auch wenn dies in einer Mischung vorliegt, liegt vorteilhafterweise in einem Bereich von etwa 2,5 : 1 bis etwa 1 : 2,5, weiter bevorzugt in einem Bereich von etwa 2,2 : 1 bis etwa 1,2 : 1.

Die Korrosionsschutzzusammensetzung kann neben dem mindestens einen Butylkautschuk, bevorzugt zumindest einem unvernetzten Butylkautschuk, besonders bevorzugt mindestens einen unvernetzten Butylkautschuk und/oder Polyisobutylen in einer Menge in einem Bereich von etwa 20 Gew.-% bis etwa 70 Gew.-%, weiter bevorzugt in einer Menge in einem Bereich von etwa 30 Gew.-% bis etwa 67 Gew.-%, bezogen auf die Gesamtmenge der Korrosionsschutzzusammensetzung, weitere Additive enthalten. Die Additive sind ausgewählt aus einer Gruppe umfassend Vernetzungsmittel, Weichmacher, Füllmaterialien, Antioxidationsmittel, Tackifier, polymere Haftvermittler und/oder Pigmente, einschließlich Farbpigmente und Ruß. Als Weichmacher wird bevorzugt ein Prozessöl eingesetzt, wobei auf den Einsatz eines Prozessöles insbesondere dann verzichtet oder aber dessen Menge verringert werden kann, wenn in der Korrosionsschutzzusammensetzung mindestens ein depolymerisierter Butylkautschuk wie weiter vorstehend beschrieben vorhanden ist. Der Weichmacher ist vorzugsweise in einer Menge in einem Bereich von etwa 0,5 Gew.-% bis etwa 10 Gew.-%, weiter bevorzugt in einer Menge in einem Bereich von etwa 2 Gew.-% bis etwa 8 Gew.-%, jeweils bezogen auf die Gesamtmenge der Korrosionsschutzzusammensetzung, von dieser umfasst.

Das mindestens eine Füllmaterial ist in einer Menge in einem Bereich von etwa 10 Gew.-%, bevorzugt von etwa 20 Gew.-%, bis etwa 70 Gew.-%, weiter bevorzugt in einem Bereich von etwa 20 Gew.-% bis etwa 56 Gew.-%, noch weiter bevorzugt in einem Bereich von etwa 25 Gew.-% bis etwa 55 Gew.-%, jeweils bezogen auf die Gesamtmenge der Korrosionsschutzzusammensetzung, in dieser vorhanden. Besonders bevorzugt ist das mindestens eine Füllmaterial pulverförmig oder faserförmig ausgebildet. Besonders bevorzugt umfasst die Korrosionsschutzzusammensetzung mindestens ein erstes pulverförmiges Material und mindestens ein zweites faserförmiges Füllmaterial. Besonders bevorzugt ist bei einer solchen kombinierten Zugabe mindestens eines pulverförmigen und mindestens eines faserförmigen Füllmateriales das faserförmige Füllmaterial in einer geringen Menge, verglichen mit dem pulverförmigen Material, der Korrosionsschutzzusammensetzung zugesetzt, bevorzugt in einer Menge in einem Bereich von etwa 0,1 Gew.-% bis etwa 1 Gew.-%, bezogen auf die Gesamtmenge der Korrosionsschutzzusammensetzung. Bevorzugt ist das mindestens eine Füllmaterial ausgewählt aus einer Gruppe der pulverförmigen mineralischen Füllstoffe oder der mineralischen und/oder organischen faserartigen Füllstoffe, beispielsweise Talkum, Zinkoxid, Wollastonit mit Nadelstruktur, Cellulosefasern o.ä. Es kann ausgewählt sein aus einer Gruppe organischer Fasern, wie beispielsweise aus Acrylnitrilfasern, in einer Länge in einem Bereich von 1,5 mm bis etwa 20 mm, weiter bevorzugt in einer Länge in einem Bereich von etwa 4 mm bis etwa 15 mm, bevorzugt mit einer Feinheit in einem Bereich von etwa 0,5 dtex bis 100 dtex, weiter bevorzugt mit einer Feinheit in einem Bereich von etwa 1 dtex bis 20 dtex, jeweils gemessen gemäß ISO 1144 in der Version von 1973. Soweit ein pulverförmiger Füllstoff, insbesondere ein mineralischer pulverförmiger Füllstoff, eingesetzt wird, weist dieser vorteilhafterweise einen Rückstand in Prozent bei einer Siebanalyse gemäß DIN 66165 in der Version 1987-04 bei H-100 (100 μm) von etwa 1 % bis etwa 5 %, bei H-60 (60 μm) von etwa 1 % bis etwa 5 % und bei H-30 (30 μm) in einem Bereich von etwa 1 % bis etwa 5 % auf.

Soweit mindestens ein Antioxidationsmittel vorgesehen ist, kann dieses, vorzugsweise eine Mischung verschiedener Antioxidationsmittel, in einer Menge in einem Bereich von etwa 0,1 Gew.-% bis etwa 1 Gew.-%, weiter bevorzugt in einer Menge in einem Bereich von etwa 0,2 Gew.-% bis etwa 0,5 Gew.-%, jeweils bezogen auf die Gesamtmenge der Korrosionsschutzzusammensetzung in dieser vorhanden sein. Soweit in der Korrosionsschutzzusammensetzung mindestens ein Stabilisationsmittel, dass auch als Dispergierhilfsmittel bezeichenbar ist, vorhanden ist, ist dieses vorteilhafterweise ausgewählt aus einer Gruppe umfassend $C_{10}$-bis $C_{24}$-Carbonsäuren und ist vorteilhafterweise Stearinsäure. Das mindestens eine Stabilisationsmittel/Dispegierhilfsmittel ist bevorzugt in einer Menge in einem Bereich von etwa 0,05 Gew.-% bis etwa 0,5 Gew.-%, bezogen auf die Gesamtmenge der Korrosionsschutzzusammensetzung, in dieser vorhanden. Dabei können auch Metallsalze der angesprochenen Carbonsäuren wie beispielsweise Zinkstearate eingesetzt werden. Auch ein Flammschutzmittel kann eingesetzt werden, vorteilhafterweise in einer Menge in einem Bereich von etwa 0,02 Gew.-% bis etwa 2 Gew.-%, bezogen auf die Gesamtmenge der erfindungsgemäßen Korrosionsschutzzusammensetzung.

Die Korrosionsschutzzusammensetzung kann weiterhin mindestens einen Tackifier, insbesondere ein Kohlenwasserstoffharz, umfassen in einer Menge in einem Bereich von etwa 5 Gew.-% bis etwa 25 Gew.-%, weiter bevorzugt in einer Menge in einem Bereich von etwa 8 Gew.-% bis etwa 20 Gew.-%, jeweils bezogen auf die Gesamtmenge der Korrosionsschutzzusammensetzung.

Die Korrosionsschutzzusammensetzung weist bevorzugt mindestens ein Vernetzungsmittel, vorteilhafterweise ausgewählt aus einer Gruppe umfassend mindestens ein Phenolharz, auf. Besonders bevorzugt ist das mindestens eine Phenolharz hergestellt aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, wobei besonders bevorzugt Formaldehyd eingesetzt ist. Als Phenol-Derivate werden insbesondere tetra-Butylphenol, Nonylphenol oder Octylphenol eingesetzt, wobei aber auch Aryl-Derivate, insbesondere Phenylphenol, als auch zweiwertige Phenole wie Resorcin oder Bisphenol A und Naphthole eingesetzt werden können. Besonders bevorzugt sind Octylphenol-Formaldeyd-Harze. Die erfindungsgemäßen Phenolharze sind insbesondere solche, die in die Klasse der sogenannten Resole fallen, d. h. durch eine basisch katalysierte Reaktion der genannten Ausgangsprodukte hergestellt werden. Vorteilhafterweise umfasst die Korrosionsschutzzusammensetzung das mindestens eine Vernetzungsmittel in einer Menge in einem Bereich von etwa 0,2 Gew.-% bis etwa 10 Gew.-%, weiter bevorzugt in einer Menge in einem Bereich von etwa 1 Gew.-%, weiter bevorzugt von etwa 3,5 Gew.-%, bis etwa 8 Gew.-%, bevorzugt bis etwa 4 Gew.-%, bezogen auf die Gesamtmenge der Korrosionsschutzzusammensetzung.

Die Korrosionszusammensetzung umfasst bevorzugt mindestens einen polymeren Haftvermittler in einer Menge in einem Bereich zwischen etwa 0,05 Gew.-% und etwa 0,5 Gew.-%, bevorzugt in einem Bereich zwischen etwa 0,04 Gew.-% und etwa 0,5 Gew.-%, bezogen auf die Gesamtmenge der Korrosionszusammensetzung. Besonders bevorzugt ist dabei der mindestens eine polymere Haftvermittler ausgewählt aus einer Gruppe der Polyethylene und/oder Polypropylene. Bei Vorsehung einer Trägerfolie aus Polyethylen ist der mindestens eine polymere Haftvermittler bevorzugt ausgewählt aus einer Gruppe umfassend mindestens ein Polyethylen, entsprechendes gilt bei Polypropylen. Der mindestens eine polymere Haftvermittler kann bevorzugt als Masterbatch eingesetzt werden, dem dabei bevorzugt Farbpigmente beigegeben sein können. Die Farbpigmente können dabei in Bezug auf den mindestens einen polymeren Haftvermittler in einer Menge von etwa 0,5 Gew.-% bis etwa 6 Gew.-%, bezogen auf die Gesamtmenge des eingesetzten polymeren Haftvermittlers, umfasst sein, wobei der Rest gebildet wird aus dem Polyethylen und/oder Polypropylen.

Soweit in der vorliegenden Erfindung der Begriff "etwa" in Bezug auf Werte, Wertbereiche oder werthaltige Begriffe verwendet wird, ist hierunter dasjenige zu verstehen, was der Fachmann in dem gegebenen Zusammenhang als fachmännisch üblich ansehen wird. Insbesondere sind Abweichungen der angegebenen Werte, Wertbereiche oder werthaltigen Begriffe von +/- 10 %, bevorzugt +/- 5 %, weiter bevorzugt +/- 2%, von dem Begriff "etwa" umfasst.

Ein erfindungsgemäßes Korrosionsschutzprodukt kann derart aufgebaut sein, dass es zwei äußere Lagen, umfassend die Korrosionsschutzzusammensetzung, aufweist, zwischen welchen eine innere Lage, gebildet aus einer Trägerfolie oder einer Streckbremse, wie vorstehend beschrieben, mit auf einer oder beiden Seiten desselben angeordneten Haftvermittlungsschicht aus der erfindungsgemäßen Haftvermittlungszusammensetzung angeordnet ist. Ist das erfindungsgemäße Korrosionsschutzprodukt derart ausgebildet, dass es zwei äußere Korrosionsschutzschichten aus einer Korrosionsschutzzusammensetzung und eine etwa mittig zwischen diesen angeordnete Trägerfolie oder Streckbremse mit einer auf beiden Seiten derselben angeordneten Haftvermittlungsschicht aus der erfindungsgemäßen Haftvermittlungszusammensetzung aufweist, so ist das erfindungsgemäße Korrosionsschutzband symmetrisch aufgebaut. Es kann auch asymmetrisch aufgebaut sein. Beispielsweise kann vorgesehen sein, dass das Produkt nur eine einzige Lage der Korrosionsschutzzusammensetzung als Korrosionsschutzschicht aufweist, welche auf einer Trägerfolie angeordnet ist, die auf einer oder beiden Seiten eine Haftvermittlungsschicht aus der erfindungsgemäßen Haftvermittlungszusammensetzung aufweist. Bei Vorsehung von zwei Haftvermittlungsschichten aus der erfindungsgemäßen Haftvermittlungszusammensetzung liegt dann z. B. eine äußere Schicht vor, die eine andere Zusammensetzung aufweisen kann als die Haftvermittlungsschicht auf der anderen, der Korrosionsschutzschicht zugewandten Seite der Trägerfolie. Insbesondere können, wie weiter oben beschrieben, in einer außenliegenden Haftvermittlungsschicht aus der erfindungsgemäßen Haftvermittlungszusammensetzung auch Additive vorgesehen sein, insbesondere auch gegebenenfalls Katalysatormittel und/oder Co-Reagenzien, die ein Katalysatormittel verträglich machen. Als Katalysatormittel kann beispielsweise Zinkchlorid oder Zinkstearat eingesetzt werden, welches eine Vernetzung insbesondere bei höheren Temperaturen in einer Korrosionsschutzzusammensetzung der Korrosionsschutzschicht beschleunigen kann. Bei Aufwicklung oder Aufbringung des Korrosionsschutzproduktes auf rohrförmigen oder sonstigen Gegenständen mit einer Überlappung kann bei Vorsehung von mindestens einem Katalysatormittel in einer äußeren Haftvermittlungsschicht eine Vernetzung, bevorzugt bei höheren Temperaturen, insbesondere bei Vorsehung mindestens eines Vernetzungsmittels in der Korrosionsschutzzusammensetzung, im Überlappungsbereich initiiert werden, sodass ein festerer Halt, insbesondere ohne Faltenbildung, im Überlappungsbereich zwischen der äußeren Haftvermittlungsschicht und der auf der gegenüberliegenden Seite angeordneten Korrosionsschutzzusammensetzung und auch insgesamt erzielbar ist.

Ein asymmetrischer Aufbau des erfindungsgemäßen Korrosionsschutzbandes kann auch dadurch erzielt werden, dass auf beiden Seiten einer Trägerfolie oder Streckbremse jeweils eine Korrosionsschutzschicht aus einer Korrosionsschutzzusammensetzung, die nicht identisch sein müssen, aufgebracht sein kann, wobei die Stärke der Korrosionsschutzschichten unterschiedlich ist. Die Trägerfolie oder Streckbremse als Träger weist dabei auf mindestens einer Seite, bevorzugt auf beiden Seiten derselben eine Haftvermittlungsschicht aus der erfindungsgemäßen Haftvermittlungszusammensetzung auf.

Wie bereits weiter vorstehend beschrieben, wird der Träger insbesondere in Form einer Trägerfolie oder einer Streckbremse mit auf einer Seite derselben angeordneten Haftvermittlungsschicht, bevorzugt auf beiden Seiten angeordneten Haftvermittlungsschicht aus der erfindungsgemäßen Haftvermittlungszusammensetzung, nach Herstellung, bevorzugt in Coextrusions- oder Laminierverfahren, weiter bevorzugt in Coextrusionsverfahren, einer Reckung unterzogen. Nachfolgend wird ein solcher zwei- oder dreilagiger Schichtenverbund mit der Korrosionsschutzzusammensetzung zur Bildung einer Korrosionsschutzschicht auf wenigstens einer Seite beschichtet. Die Korrosionsschutzschicht weist vorteilhafterweise eine Stärke in einem Bereich von etwa 0,25 mm bis etwa 2 mm, weiter bevorzugt eine Stärke in einem Bereich von etwa 0,35 mm bis etwa 1,3 mm auf.

Zusätzlich zu dem vorstehend geschilderten erfindungsgemäßen Korrosionsschutzprodukt kann ein weiteres Produkt, insbesondere als Band, zur Vermittlung eines ergänzenden mechanischen Schutzes vorgesehen sein. Das weitere Produkt ist mindestens einlagig aufgebaut und ist bevorzugt ein-, zwei- oder dreilagig aufgebaut. Es kann jedoch auch vierlagig oder sonst wie höherlagig aufgebaut sein. Das weitere Produkt ist als mechanisches Schutzprodukt anzusprechen. Das weitere Produkt umfasst bevorzugt eine Lage aus mindestens einem Polyethylen und/oder Polypropylen, bevorzugt mindestens ein Polyethylen, bevorzugt elektronenstrahlvernetzbarem Polyethylen oder Polypropylen, ausreichender Stärke. Soweit Polyethylen eingesetzt wird, weist dieses vorzugsweise eine Reißdehnung gemäß EN ISO 527 in der Version 2005-06 von ≥300 %, weiter bevorzugt ≥400 %, noch weiter bevorzugt ≥500 %, bevorzugt einer solchen in einem Bereich von etwa 300 % bis etwa 800 % auf. Weiter bevorzugt weist ein geeignetes Polyethylen eine Zugspannung gemäß EN ISO 527 in der Version 2012-06 in einem Bereich von etwa 8 MPa bis etwa 25 MPa, weiter bevorzugt in einem Bereich von etwa 12 MPa bis etwa 20 MPa auf.

Die mindestens eine Lage aus Polyethylen und/oder Polypropylen, bevorzugt genau eine Lage, des mechanischen Schutzproduktes kann auf einer Seite mit einer Klebeschicht versehen sein, es kann jedoch auch vorgesehen sein, dass dieses auf einer Seite mit einer Korrosionsschutzschicht aus einer Korrosionsschutzzusammensetzung, wie weiter vorstehend beschrieben, versehen ist.

Darüber hinaus kann zusätzlich zum Korrosionsschutzprodukt und/oder mechanischem Schutzprodukt noch eine Rohrschutzmatte vorgesehen sein, welche um das mindestens eine Korrosionsschutzprodukt, gegebenenfalls auch in Kombination mit dem mechanischen Schutzprodukt, angeordnet ist, wodurch eine vorteilhafte, insbesondere lastverteilende Wirkung auf die unter der Rohrschutzmatte liegende Umhüllung aus dem mindestens einen Korrosionsschutzprodukt vermittelt wird. Es können dafür beispielsweise auch rohrförmige Gegenstände vorgesehen sein, auf denen auch beispielsweise zwei oder mehr erfindungsgemäße Korrosionsschutzprodukte angeordnet werden.

Mit dem erfindungsgemäßen Korrosionsschutzprodukt kann jedwedes Produkt, welches korrodieren kann, geschützt werden. Besonders bevorzugt wird das erfindungsgemäße Korrosionsschutzprodukt für Rohre und Anlagen mit Rohren eingesetzt. Insbesondere wird das erfindungsgemäße Korrosionsschutzprodukt eingesetzt für die Umhüllung von Pipelines oder Gasleitungen gleich welcher Art. Es kann auch eingesetzt werden für sonstige technische Anlagen und/oder Bereichen, in welchen Korrosion auftreten kann, dabei nicht nur in Form einer Wicklung, sondern auch in einer Form einer Auflage oder Abdeckung.

Die vorliegende Erfindung betrifft auch die Verwendung der erfindungsgemäßen Haftvermittlungszusammensetzung wie weiter oben beschrieben in erfindungsgemäßen Korrosionsschutzprodukten, in diesen in Form von mindestens einer Haftvermittlungsschicht. Besonders bevorzugt ist erfindungsgemäß dabei eine Verwendung, bei welcher das Korrosionsschutzprodukt einen Träger aus einem Trägermaterial, ausgewählt aus einer Gruppe umfassend Polyethylene und/oder Polypropylene, bevorzugt solche wie weiter oben beschrieben, und mindestens eine Korrosionsschutzschicht aus einer Korrosionsschutzzusammensetzung, wie weiter oben beschrieben, insbesondere einer solchen umfassend mindestens ein Butylkautschuk und/oder mindestens ein Polyisobutylen, aufweist, wobei weiter bevorzugt zwischen der Korrosionsschutzschicht und dem Träger, bevorzugt in Form einer Trägerfolie oder Streckbremse, mindestens eine Haftvermittlungsschicht aus der erfindungsgemäßen Haftvermittlungszusammensetzung angeordnet ist, wobei letztere auch auf beiden Seiten eines Trägers, insbesondere in Form einer Trägerfolie oder einer Streckbremse, angeordnet sein kann. Besonders bevorzugt ist die Verwendung in einem Korrosionsschutzprodukt in Bandform, weiter bevorzugt mit einem Aufbau wie vorstehend beschrieben.

Die vorliegende Erfindung betrifft des Weiteren ein Verfahren zur Erzielung eines Korrosionsschutzes auf Rohren und Rohre umfassenden Anlagen sowie sonstigen Anlagen und Einbauten mit einem erfindungsgemäßen Korrosionsschutzprodukt wie weiter oben beschrieben. Dieses wird dabei in der vorstehend geschilderten Form angewendet. Besonders bevorzugt werden gemäß dem erfindungsgemäßen Verfahren Rohre und Rohre umfassende Anlagen mit einem Korrosionsschutzprodukt in Bandform umwickelt. Es können dabei auch Primer oder Voranstrichmittel eingesetzt werden.

Die vorliegende Erfindung betrifft weiterhin ein Verfahren zur Herstellung eines Trägers, insbesondere in Form einer Trägerfolie oder aber einer Streckbremse, wie vorstehend beschrieben, wobei das Trägermaterial und die Haftvermittlungszusammensetzung coextrudiert werden. Bevorzugt erfolgt nach der Coextrusion gemäß dem erfindungsgemäßen Verfahren eine Elektronenstrahlvernetzung des erhaltenen Produktes, welches mindestens zweilagig oder dreilagig bei Aufbringung einer Haftvermittlungsschicht aus der erfindungsgemäßen Haftvermittlungszusammensetzung auf beiden Seiten des Trägers, bevorzugt in Form einer Trägerfolie oder einer Streckbremse, ausgestaltet sein kann. Alternativ erfolgt bevorzugt nach der Coextrusion gemäß dem erfindungsgemäßen Verfahren eine Vernetzung oder Verbindung mittels Wärmebehandlung des erhaltenen Produktes.

Bevorzugt wird vor der Coextrusion eine Mischung aus den Bestandteilen der erfindungsgemäßen Haftvermittlungsschicht hergestellt. Diese Mischung wird bevorzugt bei einer Temperatur in einem Bereich von etwa 150 °C bis etwa 200 °C, bevorzugt in einem Bereich von etwa 160 °C bis etwa 180 °C, homogenisiert. Nach erfolgter Homogenisierung wird diese Mischung bevorzugt abgekühlt auf eine Temperatur in einem Bereich von etwa 10 °C bis etwa 80 °C, weiter bevorzugt auf eine Temperatur in einem Bereich von etwa 20 °C bis etwa 60 °C, wobei die Abkühlung bevorzugt auf einem Walzwerk erfolgt. Anschließend erfolgt bevorzugt eine Granulierung. Anschließend kann die Coextrusion durchgeführt werden. Dabei können Einschnecken- oder Doppelschneckenextruder zum Einsatz kommen. Die Coextrusion wird bevorzugt bei einer Temperatur in einem Bereich von etwa 170 °C bis etwa 240 °C, weiter bevorzugt bei einer Temperatur in einem Bereich von etwa 200 °C bis etwa 220 °C, durchgeführt. Nach der Coextrusion erfolgt eine Abkühlung des erhaltenen koextrudierten Zwischenproduktes, welches den Träger in Form einer Trägerfolie oder einer Streckbremse mit einer auf einer oder zwei Seiten desselben angeordneten Haftvermittlungsschicht aus der erfindungsgemäßen Haftvermittlungszusammensetzung aufweist. Anschließend erfolgt eine Elektronenstrahlvernetzung beispielsweise durch β-Strahlen mit einer Dosis von 100 kGy. Bevorzugt erfolgt eine Vernetzung durch Elektronenstrahlen mit β-Strahlen mit einer Dosis in einem Bereich von etwa 25 kGy bis etwa 250 kGy. Anschließend, aber auch vor der Elektronenstrahlvernetzung, kann der zwei- oder dreilagige Verbund aus Träger mit einer oder zwei Haftvermittlungsschichten auf beiden Seiten desselben einer Reckung unterworfen werden. Alternativ erfolgt bevorzugt eine Vernetzung oder Verbindung mittels Wärmebehandlung bei einer Temperatur, bei der die Viskosität der Bestandteile der Haftvermittlungszusammensetzung, vor allem des mindestens einen Butylkautschuks und des mindestens einen Elastomeren, herabgesetzt ist, bevorzugt bei etwa 150°C bis etwa 200°C, weiter bevorzugt bei etwa 160°C bis etwa 180°C.

Die vorliegende Erfindung wird anhand der nachfolgenden Beispiele näher erläutert. Es sei an dieser Stelle vorrausgeschickt, dass die in den Beispielen angegebenen Merkmale solche sind, die mit sämtlichen einzelnen oder miteinander in der allgemeinen Beschreibung beschriebenen Merkmale kombinierbar sind. Insbesondere ist die Zusammensetzung der angegebenen Haftvermittlungszusammensetzung nur beispielhaft.

Eine erste erfindungsgemäße Haftvermittlungszusammensetzung besteht aus 50 Gew.-% eines zumindest teilweise vorvernetzten Butylkautschuks mit den in der allgemeinen Beschreibung angegebenen Eigenschaften, 33,33 Gew.-% eines elektronenstrahlvernetzbaren Polyethylens und 16,67 Gew.-% eines Ethylenpropylen-Dien-Kautschuks mit 5-Ethyliden-2-Norbornen als Dien.

Eine zweite erfindungsgemäße Haftvermittlungszusammensetzung besteht aus 50 Gew.-% eines elektronenstrahlvernetzbaren Polyethylens mittlerer Dichte, 25 Gew.-% eines unvernetzten Butylkautschuks mit den in der allgemeinen Beschreibung angegebenen Eigenschaften und 25 Gew.-% eines Ethylen-Propylen-Dien-Kautschuk mit 5-Ethyliden-2-Norbornen als Dien.

Die beiden vorgenannten zwei Haftvermittlungszusammensetzungen wurden im Coextrusionsverfahren mit einer Trägerfolie aus einem elektronenstrahlvernetzbaren Polyethylen, welches identisch ist zu demjenigen in den beiden Haftvermittlungszusammensetzungen enthaltenen Polyethylen war, zu einem Zwischenprodukt in Form eines Trägers mit auf beiden Seiten angeordneten Haftvermittlungsschichten verarbeitet. Die Trägerfolie des Zwischenproduktes wies dabei eine Stärke von 0,5 mm auf, die beiden Haftvermittlungsschichten eine Stärke von 40 μm. Anschließend wurde auf einer Seite dieses Zwischenproduktes aus Träger in Form einer Trägerfolie mit zwei Haftvermittlungsschichten eine Korrosionsschutzschicht aus einer Korrosionsschutzzusammensetzung aufgetragen, welche 28,5 Gew.-% eines unvernetzten Butylkautschuks, identisch zu dem in den Haftvermittlungsschichten eingesetzten, 28,5 Gew.-% eines depolymerisierten Butylkautschuks, wie in der allgemeinen Beschreibung beschrieben, 44,5 Gew.-% eines pulverförmigen mineralischen Füllmaterials in Form von Talkum, sowie sonstigen Zusätzen wie Antioxidationsmittel und Stabilisationsmittel aufwies. Die Korrosionsschutzschicht wies eine Stärke von 1,0 mm auf.

Zum Vergleich wurde eine identische Korrosionsschutzschicht auf einer identischen Trägerfolie aufgebracht, wobei hier jedoch die Haftvermittlungsschicht 50 Gew.-% eines elektronenstrahlvernetzbaren Polyethylens und 50 Gew.-% eines unvernetzten Butylkautschuks, beide entsprechend denjenigen in den beiden vorstehend beschriebenen erfindungsgemäßen Beispielen genannten Materialien, aufwies. Die Stärken der Schichten waren ebenfalls identisch. Dabei wurde der Träger in Form der Trägerfolie mit den beiden Haftvermittlungsschichten einmal einer Elektronenstrahlvernetzung unterzogen, einmal nicht. Die Elektronenstrahlvernetzung erfolgte mit β-Strahlen bei einer Dosis von 100 kGy. Nachfolgend wurde die Korrosionsschutzzusammensetzung in Form der Korrosionsschutzschicht aufgetragen.

Anschließend wurden Schälwiderstände gemäß DIN EN 12068 in der Version 1999-03 bestimmt, wobei ein Stahlrohr einlagig und nicht überlappend mit den jeweiligen Korrosionsschutzbändern umwickelt wurde. Die Messung erfolgte bei Raumtemperatur von 23 °C und bei 100 °C. Dabei ergab sich für den Schälwiderstand des erfindungsgemäßen Korrosionsschutzbandes bei 23 °C ein Wert von 20 N/cm, bei 100 °C von 1,5 N/cm, während für das Vergleichsband ohne den Ethylen-Propylen-Dien-Kautschuk bei Raumtemperatur ein Schälwiderstand von 7 N/cm und bei 100 °C von 0,4 N/cm gemessen wurde. Die Messungen wurden dabei bei den elektronenstrahlvernetzten Korrosionsschutzbändern durchgeführt.

Darüber hinaus erfolgte noch eine rheologische Untersuchung, nämlich eine Bestimmung des Speichermoduls gemäß DIN 54458:2013-03. Das Speichermodul wurde dabei sowohl an den elektronenstrahlvernetzten als auch an den nicht elektronenstrahlvernetzten Korrosionsschutzbändern bestimmt. Bei dem Vergleichskorrosionsschutzband ohne Elektronenstrahlvernetzung betrug das Speichermodul bei 100 °C 3 MPa, nach Elektronenstrahlvernetzung 1,1 MPa, wohingegen das erfindungsgemäße Korrosionsschutzband mit 50 Gew.-% eines elektronenstrahlvernetzbaren Polyethlyen, 25 Gew.-% eines unvernetzten Butylkautschuks und 25 Gew.-% eines EPDM, wie oben beschrieben, ein Speichermodul bei 100 °C von 5 MPa in der nicht elektronenstrahlvernetzten Version und von 4,1 MPa in der elektronenstrahlvernetzten Version aufwies.

Wurde in den erfindungsgemäßen Korrosionsschutzbändern der unvernetzte Butylkautschuk getauscht gegen einen vorvernetzten Butylkautschuk mit Eigenschaften wie in der allgemeinen Beschreibung beschrieben, so betrug der Schälwiderstand bei 23°C 42,1 N/cm im Vergleich zu 20,0 N/cm und lag bei 100 °C bei 1,6 N/cm im Vergleich zu 1,5 N/cm, wobei der Vergleich mit dem erfindungsgemäßen Korrosionsschutzband mit einem unvernetzten Butylkautschuk durchgeführt wurde.

Eine dritte erfindungsgemäße Haftvermittlungszusammensetzung besteht aus 33,3 Gewichtsprozent (Gewichts-% oder Gew.-%) eines nicht-elektronenstrahlvernetzbaren LDPE (Polyethylen niedriger Dichte), 33,4 Gew.-% eines teilvernetzten Butylkautschuks mit den in der allgemeinen Beschreibung angegebenen Eigenschaften und 33,3 Gew.-% eines EPDM (Ethylen-Propylen-Dien-Kautschuk) mit 5-Ethyliden-2-Norbornen als Dien.

Eine vierte erfindungsgemäße Haftvermittlungszusammensetzung besteht aus 33,3 Gew.-% eines nicht-elektronenstrahlvernetzbaren LDPE, 50 Gew.-% eines teilvernetzten Butylkautschuks mit den in der allgemeinen Beschreibung angegebenen Eigenschaften und 16,7 Gew.-% eines EPDM mit 5-Ethyliden-2-Norbornen als Dien.

Eine fünfte erfindungsgemäße Haftvermittlungszusammensetzung besteht aus 67,7 Gew.-% eines teilvernetzten Butylkautschuks mit den in der allgemeinen Beschreibung angegebenen Eigenschaften und 33,3 Gew.-% eines nicht-elektronenstrahlvernetzbaren Polypropylens (PP).

Eine sechste erfindungsgemäße Haftvermittlungszusammensetzung besteht aus 67,7 Gew.-% eines unvernetzten Butylkautschuks mit den in der allgemeinen Beschreibung angegebenen Eigenschaften und 33,3 Gew.-% eines nicht-elektronenstrahlvernetzbaren Polypropylens.

Eine siebte erfindungsgemäße Haftvermittlungszusammensetzung besteht aus 33,4 Gew.-% eines teilvernetzten Butylkautschuks mit den in der allgemeinen Beschreibung angegebenen Eigenschaften, 33,3 Gew.-% eines EPDM mit 5-Ethyliden-2-Norbornen als Dien und 33,3 Gew.-% eines nicht-elektronenstrahlvernetzbaren Polypropylens.

Eine achte erfindungsgemäße Haftvermittlungszusammensetzung besteht aus 33,4 Gew.-% eines unvernetzten Butylkautschuks mit den in der allgemeinen Beschreibung angegebenen Eigenschaften, 33,3 Gew.-% eines EPDM mit 5-Ethyliden-2-Norbornen als Dien und 33,3 Gew.-% eines nicht-elektronenstrahlvernetzbaren Polypropylens.

Eine neunte erfindungsgemäße Haftvermittlungszusammensetzung besteht aus 56,32 Gew.-% eines Standard-Butylkautschuks, 32,00 Gew.-% eines nicht-elektronenstrahlvernetzbaren Polypropylens, 10,24 Gew.-% eines Kohlenwasserstoffharzes, 0,15 Gew.-% eines Antioxidationsmittels und 1,28 Gew.-% eines schwarzen Pigmentes.

Mit der vorliegenden Erfindung wird eine Haftvermittlungszusammensetzung, ein Zwischenprodukt mit Haftvermittlungsschichten aus der erfindungsgemäßen Haftvermittlungszusammensetzung als auch ein Korrosionsschutzprodukt und Verfahren und Verwendung hierzu vorgeschlagen, mit welchem vorteilhafterweise mechanisch feste und temperaturbeständige Korrosionsschutzprodukte, bevorzugt in Bandform, zur Verfügung gestellt werden können, welche insbesondere mindestens einen Butylkautschuk und/oder mindestens ein Polyisobutylen aufweisen.

**Patentansprüche**

1. Haftvermittlungszusammensetzung für ein Korrosionsschutzprodukt, die Haftvermittlungszusammensetzung umfassend

   - etwa 20 Gew.-% bis etwa 70 Gew.-% mindestens eines Polyolefins ausgewählt aus einer Gruppe umfassend Polyethylene und/oder Polypropylene;
   - etwa 20 Gew.-% bis etwa 65 Gew.-% mindestens eines Butylkautschuks; und
   - etwa 6 Gew.-% bis etwa 35 Gew.-% mindestens eines Elastomeren ausgewählt aus einer Gruppe umfassend Ethylen-Propylen-Kautschuk und/oder Ethylen-Propylen-Dien-Kautschuk;

   jeweils bezogen auf die Gesamtmenge der Haftvermittlungszusammensetzung.

2. Haftvermittlungszusammensetzung gemäß Anspruch 1, **dadurch gekennzeichnet, dass** das mindestens eine Polyolefin elektronenstrahlvernetzbar ist.

3. Haftvermittlungszusammensetzung gemäß einem oder mehreren der vorhergehenden Ansprüche, **dadurch gekennzeichnet, dass** der mindestens eine Butylkautschuk ausgewählt ist aus einer Gruppe umfassend zumindest teilweise vernetzte und/oder unvernetzte Butylkautschuke.

4. Haftvermittlungszusammensetzung gemäß Anspruch 3, **dadurch gekennzeichnet, dass** der zumindest teilweise vernetzte Butylkautschuk eine Mooney-Viskosität ML (1 + 3) bei 127°C in einem Bereich von etwa 50 MU bis etwa 98 MU aufweist.

5. Haftvermittlungszusammensetzung gemäß Anspruch 3, **dadurch gekennzeichnet, dass** der unvernetzte Butylkautschuk ein mittleres Molekulargewicht $M_W$ in einem Bereich von etwa 150.000 bis etwa 2.000.000 und eine Mooney-Viskosität ML (1 + 8) bei 125°C in einem Bereich von etwa 20 MU bis etwa 65 MU aufweist.

6. Haftvermittlungszusammensetzung gemäß einem oder mehreren der vorhergehenden Ansprüche, **dadurch gekennzeichnet, dass** das mindestens eine Elastomer ein Ethylen-Propylen-Dien-Kautschuk ist, dessen Dien z.B. ein 5-Ethyliden-2-Norbornen in einer Menge in einem Bereich von etwa 0,8 Gew.-% bis etwa 8 Gew.-%, bezogen auf die Gesamtmenge der Monomere, die in einer Polymerisation zu dem Ethylen-Propylen-Dien-Kautschuk eingesetzt sind, ist.

7. Haftvermittlungszusammensetzung gemäß einem oder mehreren der vorhergehenden Ansprüche, **dadurch gekennzeichnet, dass** diese mindestens ein Additiv, ausgewählt aus einer Gruppe umfassend Tackifier, Antioxidantien, Katalysatoren, Co-Reagenzien und/oder Pigmente umfasst.

8. Träger mit mindestens auf einer Seite desselben aufgebrachten Haftvermittlungszusammensetzung gemäß einem oder mehreren der vorhergehenden Ansprüche 1 bis 7.

9. Träger gemäß Anspruch 8, **dadurch gekennzeichnet, dass** dieser ein Trägermaterial umfasst, ausgewählt aus einer Gruppe umfassend Polyethylen und/oder Polypropylen.

10. Träger gemäß einem oder mehreren der Ansprüche 8 oder 9, **dadurch gekennzeichnet, dass** dieser zusammen mit der Haftvermittlungszusammensetzung in Coextrusion hergestellt ist.

11. Träger gemäß einem oder mehreren der Ansprüche 9 oder 10, **dadurch gekennzeichnet, dass** das Trägermaterial elektronenstrahlvernetzbar ist.

**12.** Korrosionsschutzprodukt umfassend einen Träger mit mindestens einer Haftvermittlungszusammensetzung gemäß einem oder mehreren der Ansprüche 8 bis 11 und mit mindestens einer auf der aus der Haftvermittlungszusammensetzung gebildeten Haftvermittlungsschicht aufgebrachten Korrosionsschutzschicht aus einer Korrosionsschutzzusammensetzung.

**13.** Verfahren zur Herstellung eines Trägers gemäß einem oder mehreren der Ansprüche 8 bis 11, wobei das Trägermaterial und die Haftvermittlungszusammensetzung coextrudiert werden.

**14.** Verfahren gemäß Anspruch 13, **dadurch gekennzeichnet, dass** nach Coextrusion das erhaltene Produkt elektronenstrahlvernetzt wird.

**15.** Verfahren zur Erzielung eines Korrosionsschutzes auf Rohren und Rohre umfassenden Anlagen sowie sonstigen Anlagen und Einbauten mit einem Korrosionsschutzprodukt gemäß Anspruch 12.

**16.** Verfahren gemäß Anspruch 15, **dadurch gekennzeichnet, dass** Rohre und Rohre umfassende Anlagen mit dem Korrosionsschutzprodukt umwickelt werden.

**17.** Verwendung einer Haftvermittlungszusammensetzung gemäß einem oder mehreren der Ansprüche 1 bis 7 in Korrosionsschutzprodukten.

**18.** Verwendung gemäß Anspruch 17, **dadurch gekennzeichnet, dass** das Korrosionsschutzprodukt einen Träger aus einem Trägermaterial, ausgewählt aus einer Gruppe umfassend Polyethylene und/oder Polypropylene, und mindestens eine Korrosionsschutzschicht aus einer Korrosionsschutzzusammensetzung, umfassend mindestens einen Butylkautschuk und/oder mindestens ein Polyisobutylen, aufweist.

**Claims**

**1.** Adhesion promoting composition for an anti-corrosion product, comprising

- about 20% by weight to about 70% by weight of at least one polyolefin selected from a group comprising polyethylene and/or polypropylene;
- about 20% by weight to about 65% by weight of at least one butyl rubber; and
- about 6% by weight to about 35% by weight of at least one elastomer selected from a group comprising ethylene-propylene-rubber and/or ethylene-propylene-diene rubber;

each based on the total quantity of the adhesion promoting composition.

**2.** Adhesion promoting composition according to claim 1, **characterized in that** the at least one polyolefin is electron-beam cross-linkable.

**3.** Adhesion promoting composition according to one or more of the preceding claims, **characterized in that** the at least one butyl rubber is selected from a group comprising at least partly cross-linked and/or un-crosslinked butyl rubbers.

**4.** Adhesion promoting composition according to claim 3, **characterized in that** the at least partly cross-linked butyl rubber has a Mooney viscosity ML (1+3) at 127 °C in a range of about 50 MU to about 98 MU.

**5.** Adhesion promoting composition according to claim 3, **characterized in that** the un-crosslinked butyl rubber has an average molecular weight $M_w$ in a range of about 150,000 to about 2,000,000 and a Mooney viscosity ML (1+8) at 125 °C in a range of about 20 MU to about 65 MU.

**6.** Adhesion promoting composition according to one or more of the preceding claims, **characterized in that** the at least one elastomer is an ethylene-propylene-diene-rubber, the diene being for example a 5-ethylidene-2-norbone in a quantity ranging from about 0.8% by weight to about 8% by weight, based on the total quantity of the monomers, being used in a polymerization to the ethylene-propylene-diene rubber.

**7.** Adhesion promoting composition according to one or more of the preceding claims, **characterized in that** it comprises at least one additive, selected from a group comprising tackifiers, antioxidants, catalysts, co-reagents and/or pigments.

**8.** Carrier with an adhesion promoting composition according to one or more of the preceding claims 1 to 7, applied on at least one side of it.

**9.** Carrier according to claim 8, **characterized in that** it comprises a carrier material selected from a group comprising polyethylene and/or polypropylene.

**10.** Carrier according to one or more of the claims 8 or 9, **characterized in that** it is produced in co-extrusion together with the adhesion promoting composition.

**11.** Carrier according to one or more of the claims 9 or 10, **characterized in that** the carrier material is electron-beam cross-linkable.

**12.** Anti-corrosion product comprising a carrier with at least one adhesion promoting composition according to one or more of the claims 8 to 11 and with at least one anti-corrosion layer made of an anti-corrosion composition and applied on the adhesion promoting layer which is made of the adhesion promoting composition.

**13.** Method for producing a carrier according to one or more of the claims 8 to 11, wherein the carrier material and the adhesion promoting composition are co-extruded.

**14.** Method according to claim 13, **characterized in that** after co-extrusion, the received product is electron-beam cross-linked.

**15.** Method for achieving a corrosion protection on pipes and systems comprising pipes as well as other plants and installation by means of an anti-corrosion product according to claim 12.

**16.** Method according to claim 15, **characterized in that** pipes and systems comprising pipes are wrapped with the anti-corrosion product.

**17.** Use of an adhesion promoting composition according to one or more of the claims 1 to 7 in anti-corrosion tapes.

**18.** Use according to claim 17, **characterized in that** the anti-corrosion product comprises a carrier made of a carrier material selected from a group comprising polyethylene and/or polypropylene, and at least one anti-corrosion layer made of an anti-corrosion composition, comprising at least one butyl rubber and/or at least one polyisobutylene.

**Revendications**

**1.** Composition d'accrochage pour un produit anticorrosion, comprenant :

- environ de 20 % en poids à environ 70 % en poids d'au moins une polyoléfine sélectionnée dans un groupe constitué de polyéthylène et/ou de polypropylène,
- environ de 20 % en poids à environ 65 % en poids d'au moins un caoutchouc butyle, et,
- environ de 6 % en poids à environ 35 % en poids d'au moins un élastomère sélectionné dans un groupe constitué de caoutchouc éthylène-propylène et/ou de caoutchouc éthylène-propylène-diène,

respectivement par rapport à la quantité totale de la composition d'accrochage.

**2.** Composition d'accrochage selon la revendication 1, **caractérisée en ce qu'**au moins une polyoléfine peut être réticulée au moyen d'un faisceau d'électrons.

**3.** Composition d'accrochage selon l'une ou plusieurs des précédentes revendications, **caractérisée en ce qu'**au moins un caoutchouc butyle est sélectionné dans un groupe comprenant des caoutchoucs butyles au moins en partie réticulés et/ou non réticulés.

**4.** Composition d'accrochage selon la revendication 3, **caractérisée en ce que** le caoutchouc butyle au moins en partie réticulé présente une consistance Mooney ML (1+3) à 127°C dans un intervalle d'environ 50 MU à environ 98 MU.

**5.** Composition d'accrochage selon la revendication 3, **caractérisée en ce que** le caoutchouc butyle non réticulé présente une masse moléculaire moyenne Mw comprise entre environ 150.000 et environ 2.000.000 et une consistance Mooney ML (1+8) à 125°C dans un intervalle d'environ 20 MU à environ 65 MU.

**6.** Composition d'accrochage selon l'une ou plusieurs des précédentes revendications, **caractérisée en ce qu'**au moins un élastomère est un caoutchouc éthylène-propylène-diène, dont le diène est, par exemple, un 5-éthylidène-2-norbornène, en une quantité située dans une plage comprise entre environ 0,8 % en poids et environ 8 % en poids, en rapport à la quantité totale des monomères, qui sont utilisés dans une polymérisation du caoutchouc éthylène-propylène-diène.

**7.** Composition d'accrochage selon l'une ou plusieurs des précédentes revendications, **caractérisée en ce que** celle-ci comprend au moins un additif sélectionné dans un groupe constitué d'agents poisseux, antioxydants, catalyseurs, co-réactifs et/ou pigments.

**8.** Support comportant au moins la composition d'accrochage appliquée sur un côté selon l'une ou plusieurs des précédentes revendications 1 à 7.

**9.** Support selon la revendication 8, **caractérisé en ce que** celui-ci comprend un matériau de support, sélectionné dans un groupe constitué de polyéthylène et/ou de polypropylène.

**10.** Support selon l'une ou plusieurs des revendications 8 ou 9, **caractérisé en ce que** celui-ci est fabriqué conjointement avec la composition d'accrochage en co-extrusion.

**11.** Support selon l'une ou plusieurs des revendications 9 ou 10, **caractérisé en ce que** le matériau de support peut être réticulé au moyen d'un faisceau d'électrons.

**12.** Produit anticorrosion comprenant un support avec au moins une composition d'accrochage selon l'une ou plusieurs des revendications 8 à 11, et avec au moins une couche anticorrosion, appliquée sur la couche d'accrochage formée à partir de la composition d'accrochage, à base d'une composition d'accrochage.

**13.** Procédé pour la fabrication d'un support selon l'une ou plusieurs des revendications 8 à 11, dans lequel le matériau de support et la composition d'accrochage sont co-extrudés.

**14.** Procédé selon la revendication 13, **caractérisé en ce qu'**après la co-extrusion, le produit obtenu est réticulé au moyen d'un faisceau d'électrons.

**15.** Procédé pour obtenir une protection contre la corrosion sur des tuyaux et installations comprenant des tuyaux ainsi que d'autres installations et constructions, comprenant un produit anticorrosion selon la revendication 12.

**16.** Procédé selon la revendication 15, **caractérisé en ce que** des tuyaux et installations comprenant des tuyaux sont enroulés du produit anticorrosion.

**17.** Utilisation d'une composition d'accrochage selon l'une ou plusieurs des revendications 1 à 7 dans des produits anticorrosion.

**18.** Utilisation selon la revendication 17, **caractérisé en ce que** le produit anticorrosion comporte un support composé d'un matériau support, sélectionné dans un groupe constitué de polyéthylène et/ou de polypropylène, et au moins une couche anticorrosion, à base d'une composition d'accrochage, comportant au moins un caoutchouc butyle et/ou au moins un polyisobutylène.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0421607 A1